# EUROPEAN PATENT SPECIFICATION

(11) **EP 4 197 270 B1**
(45) Date of publication and mention of the grant of the patent: **09.07.2025**
(21) Application number: 22703980.7
(22) Date of filing: 01.02.2022
(51) Int. Cl.: H04W 74/00, H04W 8/24, H04W 74/08

(54) **TWO-STEP RACH ADAPATION FOR REDUCED CAPABILITY DEVICES**
ZWEISTUFIGE RACH-ANPASSUNG FÜR VORRICHTUNGEN MIT REDUZIERTER KAPAZITÄT
ADAPTATION RACH À DEUX ÉTAPES POUR DISPOSITIFS À CAPACITÉ RÉDUITE

(30) Priority: 02.02.2021 US 202163144842 P
(43) Date of publication of application: 21.06.2023
(73) Proprietor: Telefonaktiebolaget LM Ericsson (publ), 164 83 Stockholm (SE)
(72) Inventor: HÖGLUND, Andreas, 170 62 Solna (SE); CHRISTOFFERSSON, Jan, 975 61 Luleå (SE); TIRRONEN, Tuomas, 00950 Helsinki (FI); FELTRIN, Luca, 171 47 Solna (SE)
(74) Representative: Ericsson
(86) International application number: PCT/IB2022/050835
(87) International publication number: WO 2022/167918

(56) References cited:
- ERICSSON: "TP for UE identification and access restriction", vol. RAN WG2, no. Electronic meeting; 20210125 - 20210205, 15 January 2021 (2021-01-15), XP051974028, Retrieved from the Internet <URL:https://ftp.3gpp.org/tsg_ran/WG2_RL2/TSGR2_113-e/Docs/R2-2100985.zip R2-2100985 - TP for UE identification and access restriction.docx> [retrieved on 20210115]
- TCL COMMUNICATION: "Procedure of identification for Reduced Capability NR devices", vol. RAN WG1, no. e-Meeting; 20201026 - 20201113, 17 October 2020 (2020-10-17), XP051940019, Retrieved from the Internet <URL:https://ftp.3gpp.org/tsg_ran/WG1_RL1/TSGR1_103-e/Docs/R1-2008075.zip R1-2008075.doc> [retrieved on 20201017]
- HUAWEI ET AL: "Other aspects for reduced capability devices", vol. RAN WG1, no. E-meeting; 20201026 - 20201113, 17 October 2020 (2020-10-17), XP051940090, Retrieved from the Internet <URL:https://ftp.3gpp.org/tsg_ran/WG1_RL1/TSGR1_103-e/Docs/R1-2008329.zip R1-2008329.docx> [retrieved on 20201017]
- HUAWEI ET AL: "Framework and principles for reduced capability devices", vol. RAN WG1, no. E-meeting; 20201026 - 20201113, 17 October 2020 (2020-10-17), XP051939807, Retrieved from the Internet <URL:https://ftp.3gpp.org/tsg_ran/WG1_RL1/TSGR1_103-e/Docs/R1-2007599.zip R1-2007599.docx> [retrieved on 20201017]

## Description

### CROSS REFERENCE TO RELATED APPLICATION

This application claims priority under 35 U.S.C. §119(e) to U.S. Provisional Patent Application No. 63/144,842 filed on February 2, 2021, titled "two-step RACH ADAPTATION FOR REDUCED CAPABILITY NR DEVICES".

### FIELD

The present disclosure relates generally to communication systems and, more specifically, to performing initial access by a reduced capability (RedCap) user equipment (UE).

### BACKGROUND

In wireless telecommunication, when a UE performs an initial access to establish a connection with a network node, a four-step random access (RA) process is typically used. In the four-step random access (RA) procedure, after transmitting the PRACH (Physical Random Access Channel) preamble, the UE waits for a response from the network node and then transmits the PUSCH (Physical Uplink Shared Channel) data. The PRACH transmission is typically denoted as Msg1 and the PUSCH transmission is typically denoted as Msg3. A two-step RA process was introduced in the 3^{rd} generation partnership project (3GPP) Release 16. In the two-step RA process, the PRACH (Msg1) and the PUSCH (Msg3) are transmitted together. The transmission is typically denoted as MsgA. The two-step RA process reduces the latency involved in the overall RA process and reduces control signaling overhead.

New radio (NR) was introduced in the fifth generation (5G) cellular technology to provide enhanced mobile broadband (eMBB) and critical machine type communication (CMTC) services. An example of a CMTC service is ultra-reliable and low latency communication (URLLC). These services are mainly targeted for high data rate, high reliability, or low latency scenarios. Therefore, these services may require high user equipment (UE) performance and may lead to high design cost and complexity of the UE and network equipment. Furthermore, the dimensions of the UE may also be required to be small, which makes it more difficult for devices providing eMBB and CMTC services to have long battery life.

To allow NR to be used by UEs with a longer battery life, the 3GPP Release 17 introduced a reduced capability (RedCap) UE. A RedCap UE has reduced device capabilities such as a reduced UE bandwidth, a reduced number of receiver and/or transmitter antennas, half duplex FGG (frequency division duplex), relaxed UE processing time, and/or relaxed UE processing capabilities. A RedCap UE can be used for machine type communications (MTC) and/or mobile broadband (MBB) services with low performance requirements but longer battery lifetime expectancy (e.g., a few days). Such RedCap UEs may include wireless sensors, video surveillance cameras, wearable devices, or the like.

Because of the reduced capabilities, the RedCap UE may experience a loss of cellular signal coverage due to, for example, the reduced device bandwidth, the reduced number of antennas, or the like. The loss of cellular coverage may cause difficulty for the RedCap UE to perform the two-step RA process. A RedCap UE may also have a different communication pattern than a non-RedCap UE. For example, a RedCap UE may spend a large amount of time (e.g., more than 90%) in an idle or inactive state (e.g., RRC_IDLE or RRC_INACTIVE states). In an RRC_IDLE state, a UE is switched on but does not have any established radio resource control (RRC) connection. In an RRC_INACTIVE state, a UE and a network node (e.g., gNB node) save radio and security configurations, which can be used quickly to restore connection between the UE and the network node. The RRC_INACTIVE state is particularly useful for machine type communications (MTC) and Internet of Things (IoT) applications, where small amounts of data are communicated.

Thus, there is a need for the network node to identify a UE as a RedCap UE and potentially treat the RedCap UE differently in the two-step random access process. There is also need for adjusting configurations of a standard two-step random access process so that the adjusted process can be used for a RedCap UE with enhanced likelihood of success.

The 3GPP document R2-2100985 by ERICSSON discloses functionality that will enable RedCap UEs to be explicitly identifiable to networks and allow operators to restrict their access if desired. The 3GPP document R1-2008075 by TCL Communication discloses four proposals on access identification for RedCap UEs: 1-methods study to partition preambles to minimize the impact on the current specifications; 2-methods study of identifying UE type by the location PRACH occasion; 3-consider the specific identification of the reduced capability UE type post-RAR; 4-further study to determine which method to be adopted. The 3GPP document R1- 2008329 by Huawei et al. discloses the identification and access restriction of reduced capabilities devices discussed, considering the aspects to ensure the coexistence of NR RedCap UEs and NR legacy UEs.

### SUMMARY

The invention is set out in the appended set of claims.

### BRIEF DESCRIPTION OF THE DRAWINGS

For a better understanding of the various described embodiments, reference should be made to the Detailed Description below, in conjunction with the following drawings in which like reference numerals refer to corresponding parts throughout the figures.
Figure 1 illustrates an exemplary wireless network in accordance with some embodiments.
Figure 2 illustrates an exemplary user equipment in accordance with some embodiments.
Figure 3 illustrates an exemplary virtualization environment in accordance with some embodiments.
Figure 4 illustrates an exemplary telecommunication network connected via an intermediate network to a host computer in accordance with some embodiments.
Figure 5 illustrates an exemplary host computer communicating via a base station with a user equipment over a partially wireless connection in accordance with some embodiments.
Figure 6 illustrates an exemplary method implemented in a communication system including a host computer, a base station, and a user equipment in accordance with some embodiments.
Figure 7 illustrates an exemplary method implemented in a communication system including a host computer, a base station, and a user equipment in accordance with some embodiments.
Figure 8 illustrates an exemplary method implemented in a communication system including a host computer, a base station, and a user equipment in accordance with some embodiments.
Figure 9 illustrates an exemplary method implemented in a communication system including a host computer, a base station, and a user equipment in accordance with some embodiments.
Figure 10 illustrates an exemplary wireless network in accordance with some embodiments.
Figure 11 illustrates an exemplary network node capable of communicating with two user equipment in accordance with some embodiments.
Figure 12 is an exemplary signaling diagram illustrating a four-step random access process in accordance with some embodiments.
Figure 13 is an exemplary signaling diagram illustrating a standard two-step random access process in accordance with some embodiments.
Figure 14 is a flowchart illustrating a method for performing initial access by a RedCap UE in accordance with some embodiments.
Figure 15 is a flowchart illustrating a method for determining if a RedCap UE has poor signal coverage in accordance with some embodiments.
Figure 16 is a flowchart illustrating various ways of adjusting configurations of the standard two-step random access process and using the adjusted process to facilitate initial access.

### DETAILED DESCRIPTION

To provide a more thorough understanding of the present invention, the following description sets forth numerous specific details, such as specific configurations, parameters, examples, and the like. It should be recognized, however, that such description is not intended as a limitation on the scope of the present invention but is intended to provide a better description of the exemplary embodiments.

Throughout the specification and claims, the following terms take the meanings explicitly associated herein, unless the context clearly dictates otherwise:
The phrase "in one embodiment" as used herein does not necessarily refer to the same embodiment, though it may. Thus, as described below, various embodiments of the invention may be readily combined.

As used herein, the term "or" is an inclusive "or" operator and is equivalent to the term "and/or," unless the context clearly dictates otherwise.

The term "based on" is not exclusive and allows for being based on additional factors not described unless the context clearly dictates otherwise.

As used herein, and unless the context dictates otherwise, the term "coupled to" is intended to include both direct coupling (in which two elements that are coupled to each other contact each other) and indirect coupling (in which at least one additional element is located between the two elements). Therefore, the terms "coupled to" and "coupled with" are used synonymously. Within the context of a networked environment where two or more components or devices are able to exchange data, the terms "coupled to" and "coupled with" are also used to mean "communicatively coupled with", possibly via one or more intermediary devices.

In addition, throughout the specification, the meaning of "a", "an", and "the" includes plural references, and the meaning of "in" includes "in" and "on".

Although some of the various embodiments presented herein constitute a single combination of inventive elements, it should be appreciated that the inventive subject matter is considered to include all possible combinations of the disclosed elements. As such, if one embodiment comprises elements A, B, and C, and another embodiment comprises elements B and D, then the inventive subject matter is also considered to include other remaining combinations of A, B, C, or D, even if not explicitly discussed herein. Further, the transitional term "comprising" means to have as parts or members, or to be those parts or members. As used herein, the transitional term "comprising" is inclusive or open-ended and does not exclude additional, unrecited elements or method steps.

In various embodiments, the devices, instruments, systems, and methods described herein can be used to adjust configurations associated with the standard 2-step random access (RA) process. As described above, the standard two-step RA process was introduced in the 3^{rd} generation partnership project (3GPP) Release 16. Typically, the standard two-step RA process is an initial access process for using with a UE having good signal coverage and/or for using with a non-RedCap UE (e.g., a UE capable of providing eMBB and/or CMTC services). For example, if the UE is located at the center of a cell and receives good cellular signals, the standard two-step RA process can likely be successfully performed. For RedCap UE, the standard two-step RA process may need to be adapted. A RedCap UE has reduced device capabilities and oftentimes may not have a good signal coverage due to its reduced device capabilities. In addition, the standard two-step RA process generally has a higher demand of communication resources than a four-step RA process, which makes using the standard two-step RA process for RedCap UEs even more challenging. As a result, the likelihood that the standard two-step RA process can be successfully performed for a RedCap UE may be lower than that for a non-RedCap UE under similar ratio signal coverage situations. Certain aspects of the disclosure and their embodiments provide solutions to these or other challenges.

Based on various embodiments of the present disclosure, a RedCap UE can receive a determination of whether a standard two-step RA process should be used for initial access. If not, one or more configurations of the standard two-step RA process are adjusted, and the initial access process is performed using the adjusted two-step RA process. As a result, the two-step RA process can still be performed with the adjusted configurations. Thus, the initial access process can still have a shorter latency than if the four-step RA process is used. Moreover, if the standard two-step RA process is not successfully performed, the resources for data transmission are unused and result in a waste. Because the adjusted two-step RA process can increase the likelihood of success of performing the initial access, it reduces or eliminates the waste of radio communication resources, which may sometimes be in short supply. In some embodiments, if the standard two-step RA process should not be used, the RedCap UE can also perform initial access using the four-step RA process instead. As a result, the overall initial access process can be more efficient and also more likely to be successful.

It should also be appreciated that the following specification is not intended as an extensive overview, and as such, concepts may be simplified in the interests of clarity and brevity.

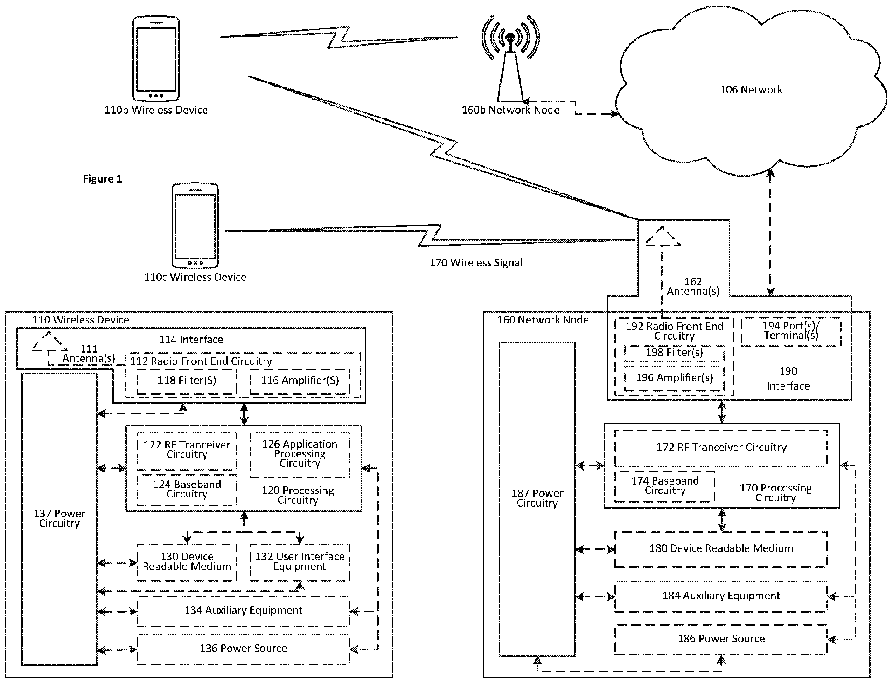

Although the subject matter described herein may be implemented in any appropriate type of system using any suitable components, the embodiments disclosed herein are described in relation to a wireless network, such as the example wireless network illustrated in Figure 1. For simplicity, the wireless network of Figure 1 only depicts network 106, network nodes 160 and 160b, and WDs 110, 110b, and 110c. In practice, a wireless network may further include any additional elements suitable to support communication between wireless devices or between a wireless device and another communication device, such as a landline telephone, a service provider, or any other network node or end device. Of the illustrated components, network node 160 and wireless device (WD) 110 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), New Radio (NR) and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 160 and WD 110 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 1, network node 160 includes processing circuitry 170, device readable medium 180, interface 190, auxiliary equipment 184, power source 186, power circuitry 187, and antenna 162. Although network node 160 illustrated in the example wireless network of Figure 1 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 160 are depicted as single boxes located within a larger box, or nested within multiple boxes, in practice, a network node may comprise multiple different physical components that make up a single illustrated component (e.g., device readable medium 180 may comprise multiple separate hard drives as well as multiple RAM modules).

Similarly, network node 160 may be composed of multiple physically separate components (e.g., a NodeB component and a RNC component, or a BTS component and a BSC component, etc.), which may each have their own respective components. In certain scenarios in which network node 160 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 160 may be configured to support multiple radio access technologies (RATs). In such embodiments, some components may be duplicated (e.g., separate device readable medium 180 for the different RATs) and some components may be reused (e.g., the same antenna 162 may be shared by the RATs). Network node 160 may also include multiple sets of the various illustrated components for different wireless technologies integrated into network node 160, such as, for example, GSM, WCDMA, LTE, NR, WiFi, or Bluetooth wireless technologies. These wireless technologies may be integrated into the same or different chip or set of chips and other components within network node 160.

Processing circuitry 170 is configured to perform any determining, calculating, or similar operations (e.g., certain obtaining operations) described herein as being provided by a network node. These operations performed by processing circuitry 170 may include processing information obtained by processing circuitry 170 by, for example, converting the obtained information into other information, comparing the obtained information or converted information to information stored in the network node, and/or performing one or more operations based on the obtained information or converted information, and as a result of said processing making a determination.

Processing circuitry 170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 160 components, such as device readable medium 180, network node 160 functionality. For example, processing circuitry 170 may execute instructions stored in device readable medium 180 or in memory within processing circuitry 170. Such functionality may include providing any of the various wireless features, functions, or benefits discussed herein. In some embodiments, processing circuitry 170 may include a system on a chip (SOC).

In some embodiments, processing circuitry 170 may include one or more of radio frequency (RF) transceiver circuitry 172 and baseband processing circuitry 174. In some embodiments, radio frequency (RF) transceiver circuitry 172 and baseband processing circuitry 174 may be on separate chips (or sets of chips), boards, or units, such as radio units and digital units. In alternative embodiments, part or all of RF transceiver circuitry 172 and baseband processing circuitry 174 may be on the same chip or set of chips, boards, or units

In certain embodiments, some or all of the functionality described herein as being provided by a network node, base station, eNB or other such network device may be performed by processing circuitry 170 executing instructions stored on device readable medium 180 or memory within processing circuitry 170. In alternative embodiments, some or all of the functionalities may be provided by processing circuitry 170 without executing instructions stored on a separate or discrete device readable medium, such as in a hard-wired manner. In any of those embodiments, whether executing instructions stored on a device readable storage medium or not, processing circuitry 170 can be configured to perform the described functionality. The benefits provided by such functionality are not limited to processing circuitry 170 alone or to other components of network node 160, but are enjoyed by network node 160 as a whole, and/or by end users and the wireless network generally.

Device readable medium 180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 170. Device readable medium 180 may store any suitable instructions, data or information, including a computer program, software, an application including one or more of logic, rules, code, tables, etc. and/or other instructions capable of being executed by processing circuitry 170 and, utilized by network node 160. Device readable medium 180 may be used to store any calculations made by processing circuitry 170 and/or any data received via interface 190. In some embodiments, processing circuitry 170 and device readable medium 180 may be considered to be integrated.

Interface 190 is used in the wired or wireless communication of signaling and/or data between network node 160, network 106, and/or WDs 110. As illustrated, interface 190 comprises port(s)/terminal(s) 194 to send and receive data, for example to and from network 106 over a wired connection. Interface 190 also includes radio front end circuitry 192 that may be coupled to, or in certain embodiments a part of, antenna 162. Radio front end circuitry 192 comprises filters 198 and amplifiers 196. Radio front end circuitry 192 may be connected to antenna 162 and processing circuitry 170. Radio front end circuitry may be configured to condition signals communicated between antenna 162 and processing circuitry 170. Radio front end circuitry 192 may receive digital data that is to be sent out to other network nodes or WDs via a wireless connection. Radio front end circuitry 192 may convert the digital data into a radio signal having the appropriate channel and bandwidth parameters using a combination of filters 198 and/or amplifiers 196. The radio signal may then be transmitted via antenna 162. Similarly, when receiving data, antenna 162 may collect radio signals which are then converted into digital data by radio front end circuitry 192. The digital data may be passed to processing circuitry 170. In other embodiments, the interface may comprise different components and/or different combinations of components.

In certain alternative embodiments, network node 160 may not include separate radio front end circuitry 192, instead, processing circuitry 170 may comprise radio front end circuitry and may be connected to antenna 162 without separate radio front end circuitry 192. Similarly, in some embodiments, all or some of RF transceiver circuitry 172 may be considered a part of interface 190. In still other embodiments, interface 190 may include one or more ports or terminals 194, radio front end circuitry 192, and RF transceiver circuitry 172, as part of a radio unit (not shown), and interface 190 may communicate with baseband processing circuitry 174, which is part of a digital unit (not shown).

Antenna 162 may include one or more antennas, or antenna arrays, configured to send and/or receive wireless signals. Antenna 162 may be coupled to radio front end circuitry 190 and may be any type of antenna capable of transmitting and receiving data and/or signals wirelessly. In some embodiments, antenna 162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a directional antenna used to transmit/receive radio signals in a relatively straight line. In some instances, the use of more than one antenna may be referred to as MIMO. In certain embodiments, antenna 162 may be separate from network node 160 and may be connectable to network node 160 through an interface or port.

Antenna 162, interface 190, and/or processing circuitry 170 may be configured to perform any receiving operations and/or certain obtaining operations described herein as being performed by a network node. Any information, data and/or signals may be received from a wireless device, another network node and/or any other network equipment. Similarly, antenna 162, interface 190, and/or processing circuitry 170 may be configured to perform any transmitting operations described herein as being performed by a network node. Any information, data and/or signals may be transmitted to a wireless device, another network node and/or any other network equipment.

Power circuitry 187 may comprise, or be coupled to, power management circuitry and is configured to supply the components of network node 160 with power for performing the functionality described herein. Power circuitry 187 may receive power from power source 186. Power source 186 and/or power circuitry 187 may be configured to provide power to the various components of network node 160 in a form suitable for the respective components (e.g., at a voltage and current level needed for each respective component). Power source 186 may either be included in, or external to, power circuitry 187 and/or network node 160. For example, network node 160 may be connectable to an external power source (e.g., an electricity outlet) via an input circuitry or interface such as an electrical cable, whereby the external power source supplies power to power circuitry 187. As a further example, power source 186 may comprise a source of power in the form of a battery or battery pack which is connected to, or integrated in, power circuitry 187. The battery may provide backup power should the external power source fail. Other types of power sources, such as photovoltaic devices, may also be used.

Alternative embodiments of network node 160 may include additional components beyond those shown in Figure 1 that may be responsible for providing certain aspects of the network node's functionality, including any of the functionality described herein and/or any functionality necessary to support the subject matter described herein. For example, network node 160 may include user interface equipment to allow input of information into network node 160 and to allow output of information from network node 160. This may allow a user to perform diagnostic, maintenance, repair, and other administrative functions for network node 160.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g., refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 110 includes antenna 111, interface 114, processing circuitry 120, device readable medium 130, user interface equipment 132, auxiliary equipment 134, power source 136 and power circuitry 137. WD 110 may include multiple sets of one or more of the illustrated components for different wireless technologies supported by WD 110, such as, for example, GSM, WCDMA, LTE, NR, WiFi, WiMAX, or Bluetooth wireless technologies, just to mention a few. These wireless technologies may be integrated into the same or different chips or set of chips as other components within WD 110.

Antenna 111 may include one or more antennas or antenna arrays, configured to send and/or receive wireless signals, and is connected to interface 114. In certain alternative embodiments, antenna 111 may be separate from WD 110 and be connectable to WD 110 through an interface or port. Antenna 111, interface 114, and/or processing circuitry 120 may be configured to perform any receiving or transmitting operations described herein as being performed by a WD. Any information, data and/or signals may be received from a network node and/or another WD. In some embodiments, radio front end circuitry and/or antenna 111 may be considered an interface.

As illustrated, interface 114 comprises radio front end circuitry 112 and antenna 111. Radio front end circuitry 112 comprise one or more filters 118 and amplifiers 116. Radio front end circuitry 114 is connected to antenna 111 and processing circuitry 120, and is configured to condition signals communicated between antenna 111 and processing circuitry 120. Radio front end circuitry 112 may be coupled to or a part of antenna 111. In some embodiments, WD 110 may not include separate radio front end circuitry 112; rather, processing circuitry 120 may comprise radio front end circuitry and may be connected to antenna 111. Similarly, in some embodiments, some or all of RF transceiver circuitry 122 may be considered a part of interface 114. Radio front end circuitry 112 may receive digital data that is to be sent out to other network nodes or WDs via a wireless connection. Radio front end circuitry 112 may convert the digital data into a radio signal having the appropriate channel and bandwidth parameters using a combination of filters 118 and/or amplifiers 116. The radio signal may then be transmitted via antenna 111. Similarly, when receiving data, antenna 111 may collect radio signals which are then converted into digital data by radio front end circuitry 112. The digital data may be passed to processing circuitry 120. In other embodiments, the interface may comprise different components and/or different combinations of components.

Processing circuitry 120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 110 components, such as device readable medium 130, WD 110 functionality. Such functionality may include providing any of the various wireless features or benefits discussed herein. For example, processing circuitry 120 may execute instructions stored in device readable medium 130 or in memory within processing circuitry 120 to provide the functionality disclosed herein.

As illustrated, processing circuitry 120 includes one or more of RF transceiver circuitry 122, baseband processing circuitry 124, and application processing circuitry 126. In other embodiments, the processing circuitry may comprise different components and/or different combinations of components. In certain embodiments processing circuitry 120 of WD 110 may comprise a SOC. In some embodiments, RF transceiver circuitry 122, baseband processing circuitry 124, and application processing circuitry 126 may be on separate chips or sets of chips. In alternative embodiments, part or all of baseband processing circuitry 124 and application processing circuitry 126 may be combined into one chip or set of chips, and RF transceiver circuitry 122 may be on a separate chip or set of chips. In still alternative embodiments, part or all of RF transceiver circuitry 122 and baseband processing circuitry 124 may be on the same chip or set of chips, and application processing circuitry 126 may be on a separate chip or set of chips. In yet other alternative embodiments, part or all of RF transceiver circuitry 122, baseband processing circuitry 124, and application processing circuitry 126 may be combined in the same chip or set of chips. In some embodiments, RF transceiver circuitry 122 may be a part of interface 114. RF transceiver circuitry 122 may condition RF signals for processing circuitry 120.

In certain embodiments, some or all of the functionality described herein as being performed by a WD may be provided by processing circuitry 120 executing instructions stored on device readable medium 130, which in certain embodiments may be a computer-readable storage medium. In alternative embodiments, some or all of the functionalities may be provided by processing circuitry 120 without executing instructions stored on a separate or discrete device readable storage medium, such as in a hard-wired manner. In any of those particular embodiments, whether executing instructions stored on a device readable storage medium or not, processing circuitry 120 can be configured to perform the described functionality. The benefits provided by such functionality are not limited to processing circuitry 120 alone or to other components of WD 110, but are enjoyed by WD 110 as a whole, and/or by end users and the wireless network generally.

Processing circuitry 120 may be configured to perform any determining, calculating, or similar operations (e.g., certain obtaining operations) described herein as being performed by a WD. These operations, as performed by processing circuitry 120, may include processing information obtained by processing circuitry 120 by, for example, converting the obtained information into other information, comparing the obtained information or converted information to information stored by WD 110, and/or performing one or more operations based on the obtained information or converted information, and as a result of said processing making a determination.

Device readable medium 130 may be operable to store a computer program, software, an application including one or more of logic, rules, code, tables, etc. and/or other instructions capable of being executed by processing circuitry 120. Device readable medium 130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 120. In some embodiments, processing circuitry 120 and device readable medium 130 may be considered to be integrated.

User interface equipment 132 may provide components that allow for a human user to interact with WD 110. Such interaction may be of many forms, such as visual, audial, tactile, etc. User interface equipment 132 may be operable to produce output to the user and to allow the user to provide input to WD 110. The type of interaction may vary depending on the type of user interface equipment 132 installed in WD 110. For example, if WD 110 is a smart phone, the interaction may be via a touch screen; if WD 110 is a smart meter, the interaction may be through a screen that provides usage (e.g., the number of gallons used) or a speaker that provides an audible alert (e.g., if smoke is detected). User interface equipment 132 may include input interfaces, devices and circuits, and output interfaces, devices and circuits. User interface equipment 132 is configured to allow input of information into WD 110, and is connected to processing circuitry 120 to allow processing circuitry 120 to process the input information. User interface equipment 132 may include, for example, a microphone, a proximity or other sensor, keys/buttons, a touch display, one or more cameras, a USB port, or other input circuitry. User interface equipment 132 is also configured to allow output of information from WD 110, and to allow processing circuitry 120 to output information from WD 110. User interface equipment 132 may include, for example, a speaker, a display, vibrating circuitry, a USB port, a headphone interface, or other output circuitry. Using one or more input and output interfaces, devices, and circuits, of user interface equipment 132, WD 110 may communicate with end users and/or the wireless network, and allow them to benefit from the functionality described herein.

Auxiliary equipment 134 is operable to provide more specific functionality which may not be generally performed by WDs. This may comprise specialized sensors for doing measurements for various purposes, interfaces for additional types of communication such as wired communications etc. The inclusion and type of components of auxiliary equipment 134 may vary depending on the embodiment and/or scenario.

Power source 136 may, in some embodiments, be in the form of a battery or battery pack. Other types of power sources, such as an external power source (e.g., an electricity outlet), photovoltaic devices or power cells, may also be used. WD 110 may further comprise power circuitry 137 for delivering power from power source 136 to the various parts of WD 110 which need power from power source 136 to carry out any functionality described or indicated herein. Power circuitry 137 may in certain embodiments comprise power management circuitry. Power circuitry 137 may additionally or alternatively be operable to receive power from an external power source; in which case WD 110 may be connectable to the external power source (such as an electricity outlet) via input circuitry or an interface such as an electrical power cable. Power circuitry 137 may also in certain embodiments be operable to deliver power from an external power source to power source 136. This may be, for example, for the charging of power source 136. Power circuitry 137 may perform any formatting, converting, or other modification to the power from power source 136 to make the power suitable for the respective components of WD 110 to which power is supplied.

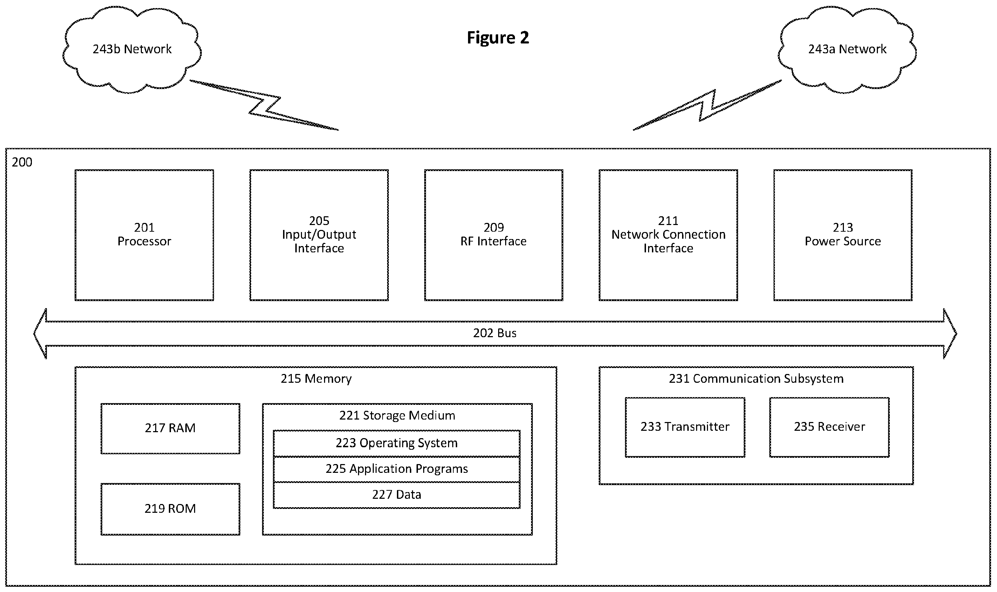

Figure 2 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 200 may be any UE identified by the 3rd Generation Partnership Project (3GPP), including a NB-IoT UE, a machine type communication (MTC) UE, a RedCap UE, and/or an enhanced MTC (eMTC) UE. UE 200, as illustrated in Figure 2, is one example of a WD configured for communication in accordance with one or more communication standards promulgated by the 3rd Generation Partnership Project (3GPP), such as 3GPP's GSM, UMTS, LTE, and/or 5G standards. As mentioned previously, the term WD and UE may be used interchangeable. Accordingly, although Figure 2 is a UE, the components discussed herein are equally applicable to a WD, and vice-versa.

In Figure 2, UE 200 includes processor 201 that is operatively coupled to input/output interface 205, radio frequency (RF) interface 209, network connection interface 211, memory 215 including random access memory (RAM) 217, read-only memory (ROM) 219, and storage medium 221 or the like, communication subsystem 231, power source 233, and/or any other component, or any combination thereof. Storage medium 221 includes operating system 223, application program 225, and data 227. In other embodiments, storage medium 221 may include other similar types of information. Certain UEs may utilize all of the components shown in Figure 2, or only a subset of the components. The level of integration between the components may vary from one UE to another UE. Further, certain UEs may contain multiple instances of a component, such as multiple processors, memories, transceivers, transmitters, receivers, etc.

In Figure 2, processing circuitry 201 may be configured to process computer instructions and data. Processing circuitry 201 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 201 may include two central processing units (CPUs). Data may be information in a form suitable for use by a computer.

In the depicted embodiment, input/output interface 205 may be configured to provide a communication interface to an input device, output device, or input and output device. UE 200 may be configured to use an output device via input/output interface 205. An output device may use the same type of interface port as an input device. For example, a USB port may be used to provide input to and output from UE 200. The output device may be a speaker, a sound card, a video card, a display, a monitor, a printer, an actuator, an emitter, a smartcard, another output device, or any combination thereof. UE 200 may be configured to use an input device via input/output interface 205 to allow a user to capture information into UE 200. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 2, RF interface 209 may be configured to provide a communication interface to RF components such as a transmitter, a receiver, and an antenna. Network connection interface 211 may be configured to provide a communication interface to network 243a. Network 243a may encompass wired and/or wireless networks such as a local-area network (LAN), a wide-area network (WAN), a computer network, a wireless network, a telecommunications network, another like network or any combination thereof. For example, network 243a may comprise a Wi-Fi network. Network connection interface 211 may be configured to include a receiver and a transmitter interface used to communicate with one or more other devices over a communication network according to one or more communication protocols, such as Ethernet, TCP/IP, SONET, ATM, or the like. Network connection interface 211 may implement receiver and transmitter functionality appropriate to the communication network links (e.g., optical, electrical, and the like). The transmitter and receiver functions may share circuit components, software or firmware, or alternatively may be implemented separately.

RAM 217 may be configured to interface via bus 202 to processing circuitry 201 to provide storage or caching of data or computer instructions during the execution of software programs such as the operating system, application programs, and device drivers. ROM 219 may be configured to provide computer instructions or data to processing circuitry 201. For example, ROM 219 may be configured to store invariant low-level system code or data for basic system functions such as basic input and output (I/O), startup, or reception of keystrokes from a keyboard that are stored in a non-volatile memory. Storage medium 221 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 221 may be configured to include operating system 223, application program 225 such as a web browser application, a widget or gadget engine or another application, and data file 227. Storage medium 221 may store, for use by UE 200, any of a variety of various operating systems or combinations of operating systems.

Storage medium 221 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 221 may allow UE 200 to access computer-executable instructions, application programs or the like, stored on transitory or non-transitory memory media, to off-load data, or to upload data. An article of manufacture, such as one utilizing a communication system may be tangibly embodied in storage medium 221, which may comprise a device readable medium.

In Figure 2, processing circuitry 201 may be configured to communicate with network 243b using communication subsystem 231. Network 243a and network 243b may be the same network or networks or different network or networks. Communication subsystem 231 may be configured to include one or more transceivers used to communicate with network 243b. For example, communication subsystem 231 may be configured to include one or more transceivers used to communicate with one or more remote transceivers of another device capable of wireless communication such as another WD, UE, or base station of a radio access network (RAN) according to one or more communication protocols, such as IEEE 802.11, CDMA, WCDMA, GSM, LTE, UTRAN, WiMax, or the like. Each transceiver may include transmitter 233 and/or receiver 235 to implement transmitter or receiver functionality, respectively, appropriate to the RAN links (e.g., frequency allocations and the like). Further, transmitter 233 and receiver 235 of each transceiver may share circuit components, software or firmware, or alternatively may be implemented separately.

In the illustrated embodiment, the communication functions of communication subsystem 231 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 231 may include cellular communication, Wi-Fi communication, Bluetooth communication, and GPS communication. Network 243b may encompass wired and/or wireless networks such as a local-area network (LAN), a wide-area network (WAN), a computer network, a wireless network, a telecommunications network, another like network or any combination thereof. For example, network 243b may be a cellular network, a Wi-Fi network, and/or a near-field network. Power source 213 may be configured to provide alternating current (AC) or direct current (DC) power to components of UE 200.

The features, benefits and/or functions described herein may be implemented in one of the components of UE 200 or partitioned across multiple components of UE 200. Further, the features, benefits, and/or functions described herein may be implemented in any combination of hardware, software or firmware. In one example, communication subsystem 231 may be configured to include any of the components described herein. Further, processing circuitry 201 may be configured to communicate with any of such components over bus 202. In another example, any of such components may be represented by program instructions stored in memory that when executed by processing circuitry 201 perform the corresponding functions described herein. In another example, the functionality of any of such components may be partitioned between processing circuitry 201 and communication subsystem 231. In another example, the non-computationally intensive functions of any of such components may be implemented in software or firmware and the computationally intensive functions may be implemented in hardware.

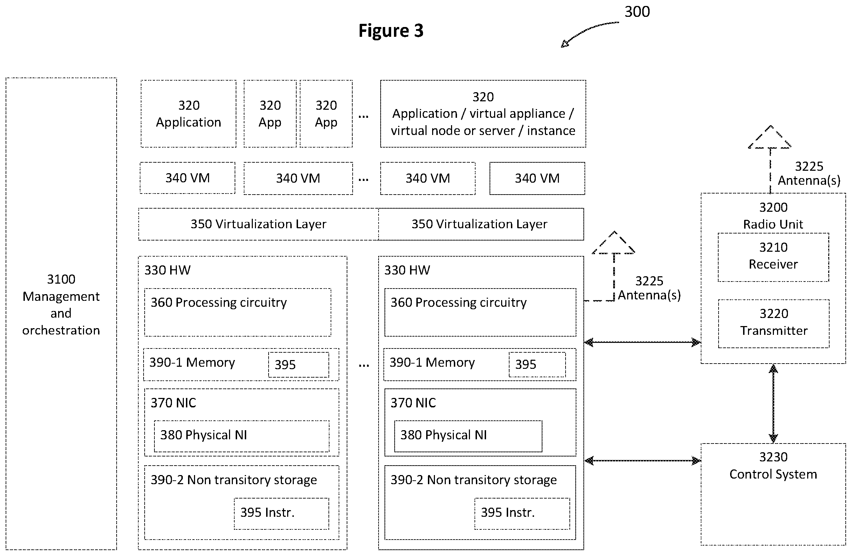

Figure 3 is a schematic block diagram illustrating a virtualization environment 300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 300 hosted by one or more of hardware nodes 330. Further, in embodiments in which the virtual node is not a radio access node or does not require radio connectivity (e.g., a core network node), then the network node may be entirely virtualized.

The functions may be implemented by one or more applications 320 (which may alternatively be called software instances, virtual appliances, network functions, virtual nodes, virtual network functions, etc.) operative to implement some of the features, functions, and/or benefits of some of the embodiments disclosed herein. Applications 320 are run in virtualization environment 300 which provides hardware 330 comprising processing circuitry 360 and memory 390. Memory 390 contains instructions 395 executable by processing circuitry 360 whereby application 320 is operative to provide one or more of the features, benefits, and/or functions disclosed herein.

Virtualization environment 300, comprises general-purpose or special-purpose network hardware devices 330 comprising a set of one or more processors or processing circuitry 360, which may be commercial off-the-shelf (COTS) processors, dedicated Application Specific Integrated Circuits (ASICs), or any other type of processing circuitry including digital or analog hardware components or special purpose processors. Each hardware device may comprise memory 390-1 which may be non-persistent memory for temporarily storing instructions 395 or software executed by processing circuitry 360. Each hardware device may comprise one or more network interface controllers (NICs) 370, also known as network interface cards, which include physical network interface 380. Each hardware device may also include non-transitory, persistent, machine-readable storage media 390-2 having stored therein software 395 and/or instructions executable by processing circuitry 360. Software 395 may include any type of software including software for instantiating one or more virtualization layers 350 (also referred to as hypervisors), software to execute virtual machines 340 as well as software allowing it to execute functions, features and/or benefits described in relation with some embodiments described herein.

Virtual machines 340, comprise virtual processing, virtual memory, virtual networking or interface and virtual storage, and may be run by a corresponding virtualization layer 350 or hypervisor. Different embodiments of the instance of virtual appliance 320 may be implemented on one or more of virtual machines 340, and the implementations may be made in different ways.

During operation, processing circuitry 360 executes software 395 to instantiate the hypervisor or virtualization layer 350, which may sometimes be referred to as a virtual machine monitor (VMM). Virtualization layer 350 may present a virtual operating platform that appears like networking hardware to virtual machine 340.

As shown in Figure 3, hardware 330 may be a standalone network node with generic or specific components. Hardware 330 may comprise antenna 3225 and may implement some functions via virtualization. Alternatively, hardware 330 may be part of a larger cluster of hardware (e.g., such as in a data center or customer premise equipment (CPE)) where many hardware nodes work together and are managed via management and orchestration (MANO) 3100, which, among others, oversees lifecycle management of applications 320.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 340 may be a software implementation of a physical machine that runs programs as if they were executing on a physical, non-virtualized machine. Each of virtual machines 340, and that part of hardware 330 that executes that virtual machine, be it hardware dedicated to that virtual machine and/or hardware shared by that virtual machine with others of the virtual machines 340, forms a separate virtual network elements (VNE).

Still in the context of NFV, Virtual Network Function (VNF) is responsible for handling specific network functions that run in one or more virtual machines 340 on top of hardware networking infrastructure 330 and corresponds to application 320 in Figure 3.

In some embodiments, one or more radio units 3200 that each include one or more transmitters 3220 and one or more receivers 3210 may be coupled to one or more antennas 3225. Radio units 3200 may communicate directly with hardware nodes 330 via one or more appropriate network interfaces and may be used in combination with the virtual components to provide a virtual node with radio capabilities, such as a radio access node or a base station.

In some embodiments, some signaling can be effected with the use of control system 3230 which may alternatively be used for communication between the hardware nodes 330 and radio units 3200.

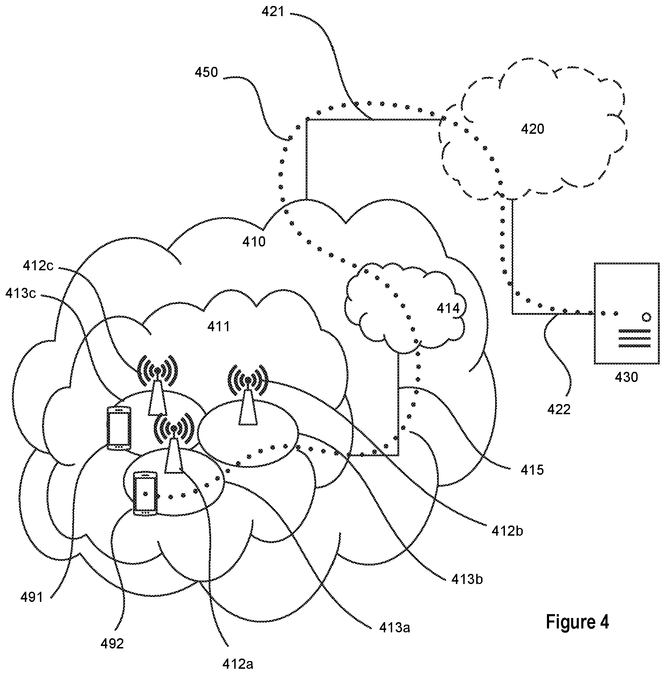

With reference to Figure 4, in accordance with an embodiment, a communication system includes telecommunication network 410, such as a 3GPP-type cellular network, which comprises access network 411, such as a radio access network, and core network 414. Access network 411 comprises a plurality of base stations 412a, 412b, 412c, such as NBs, eNBs, gNBs or other types of wireless access points, each defining a corresponding coverage area 413a, 413b, 413c. Each base station 412a, 412b, 412c is connectable to core network 414 over a wired or wireless connection 415. A first UE 491 located in coverage area 413c is configured to wirelessly connect to, or be paged by, the corresponding base station 412c. A second UE 492 in coverage area 413a is wirelessly connectable to the corresponding base station 412a. While a plurality of UEs 491, 492 are illustrated in this example, the disclosed embodiments are equally applicable to a situation where a sole UE is in the coverage area or where a sole UE is connecting to the corresponding base station 412.

Telecommunication network 410 is itself connected to host computer 430, which may be embodied in the hardware and/or software of a standalone server, a cloud-implemented server, a distributed server or as processing resources in a server farm. Host computer 430 may be under the ownership or control of a service provider, or may be operated by the service provider or on behalf of the service provider. Connections 421 and 422 between telecommunication network 410 and host computer 430 may extend directly from core network 414 to host computer 430 or may go via an optional intermediate network 420. Intermediate network 420 may be one of, or a combination of more than one of, a public, private or hosted network; intermediate network 420, if any, may be a backbone network or the Internet; in particular, intermediate network 420 may comprise two or more sub-networks (not shown).

The communication system of Figure 4 as a whole enables connectivity between the connected UEs 491, 492 and host computer 430. The connectivity may be described as an over-the-top (OTT) connection 450. Host computer 430 and the connected UEs 491, 492 are configured to communicate data and/or signaling via OTT connection 450, using access network 411, core network 414, any intermediate network 420 and possible further infrastructure (not shown) as intermediaries. OTT connection 450 may be transparent in the sense that the participating communication devices through which OTT connection 450 passes are unaware of routing of uplink and downlink communications. For example, base station 412 may not or need not be informed about the past routing of an incoming downlink communication with data originating from host computer 430 to be forwarded (e.g., handed over) to a connected UE 491. Similarly, base station 412 need not be aware of the future routing of an outgoing uplink communication originating from the UE 491 towards the host computer 430.

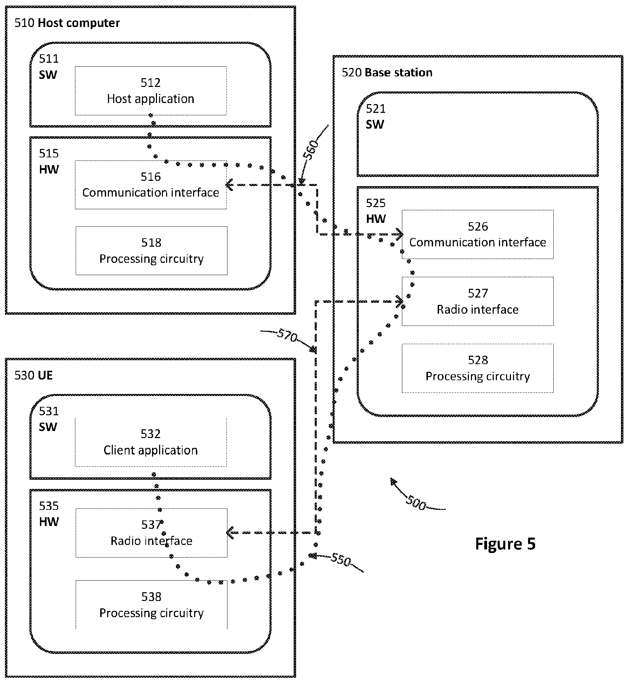

Example implementations, in accordance with an embodiment, of the UE, base station and host computer discussed in the preceding paragraphs will now be described with reference to Figure 5. In communication system 500, host computer 510 comprises hardware 515 including communication interface 516 configured to set up and maintain a wired or wireless connection with an interface of a different communication device of communication system 500. Host computer 510 further comprises processing circuitry 518, which may have storage and/or processing capabilities. In particular, processing circuitry 518 may comprise one or more programmable processors, application-specific integrated circuits, field programmable gate arrays or combinations of these (not shown) adapted to execute instructions. Host computer 510 further comprises software 511, which is stored in or accessible by host computer 510 and executable by processing circuitry 518. Software 511 includes host application 512. Host application 512 may be operable to provide a service to a remote user, such as UE 530 connecting via OTT connection 550 terminating at UE 530 and host computer 510. In providing the service to the remote user, host application 512 may provide user data which is transmitted using OTT connection 550.

Communication system 500 further includes base station 520 provided in a telecommunication system and comprising hardware 525 enabling it to communicate with host computer 510 and with UE 530. Hardware 525 may include communication interface 526 for setting up and maintaining a wired or wireless connection with an interface of a different communication device of communication system 500, as well as radio interface 527 for setting up and maintaining at least wireless connection 570 with UE 530 located in a coverage area (not shown in Figure 5) served by base station 520. Communication interface 526 may be configured to facilitate connection 560 to host computer 510. Connection 560 may be direct, or it may pass through a core network (not shown in Figure 5) of the telecommunication system and/or through one or more intermediate networks outside the telecommunication system. In the embodiment shown, hardware 525 of base station 520 further includes processing circuitry 528, which may comprise one or more programmable processors, application-specific integrated circuits, field programmable gate arrays or combinations of these (not shown) adapted to execute instructions. Base station 520 further has software 521 stored internally or accessible via an external connection.

Communication system 500 further includes UE 530 already referred to. Its hardware 535 may include radio interface 537 configured to set up and maintain wireless connection 570 with a base station serving a coverage area in which UE 530 is currently located. Hardware 535 of UE 530 further includes processing circuitry 538, which may comprise one or more programmable processors, application-specific integrated circuits, field programmable gate arrays or combinations of these (not shown) adapted to execute instructions. UE 530 further comprises software 531, which is stored in or accessible by UE 530 and executable by processing circuitry 538. Software 531 includes client application 532. Client application 532 may be operable to provide a service to a human or non-human user via UE 530, with the support of host computer 510. In host computer 510, an executing host application 512 may communicate with the executing client application 532 via OTT connection 550 terminating at UE 530 and host computer 510. In providing the service to the user, client application 532 may receive request data from host application 512 and provide user data in response to the request data. OTT connection 550 may transfer both the request data and the user data. Client application 532 may interact with the user to generate the user data that it provides.

It is noted that host computer 510, base station 520 and UE 530 illustrated in Figure 5 may be similar or identical to host computer 430, one of base stations 412a, 412b, 412c and one of UEs 491, 492 of Figure 4, respectively. This is to say, the inner workings of these entities may be as shown in Figure 5 and independently, the surrounding network topology may be that of Figure 4.

In Figure 5, OTT connection 550 has been drawn abstractly to illustrate the communication between host computer 510 and UE 530 via base station 520, without explicit reference to any intermediary devices and the precise routing of messages via these devices. Network infrastructure may determine the routing, which it may be configured to hide from UE 530 or from the service provider operating host computer 510, or both. While OTT connection 550 is active, the network infrastructure may further take decisions by which it dynamically changes the routing (e.g., on the basis of load balancing consideration or reconfiguration of the network).

Wireless connection 570 between UE 530 and base station 520 is in accordance with the teachings of the embodiments described throughout this disclosure. One or more of the various embodiments improve the performance of OTT services provided to UE 530 using OTT connection 550, in which wireless connection 570 forms the last segment. More precisely, the teachings of these embodiments may improve the battery life of stationary UEs and thereby provide benefits such as smaller or cheaper devices allowing OTT services to be deployed in more environments and to reduce maintenance costs (e.g., fewer service calls to replace/recharge batteries).

A measurement procedure may be provided for the purpose of monitoring data rate, latency and other factors on which the one or more embodiments improve. There may further be an optional network functionality for reconfiguring OTT connection 550 between host computer 510 and UE 530, in response to variations in the measurement results. The measurement procedure and/or the network functionality for reconfiguring OTT connection 550 may be implemented in software 511 and hardware 515 of host computer 510 or in software 531 and hardware 535 of UE 530, or both. In embodiments, sensors (not shown) may be deployed in or in association with communication devices through which OTT connection 550 passes; the sensors may participate in the measurement procedure by supplying values of the monitored quantities exemplified above, or supplying values of other physical quantities from which software 511, 531 may compute or estimate the monitored quantities. The reconfiguring of OTT connection 550 may include message format, retransmission settings, preferred routing etc.; the reconfiguring need not affect base station 520, and it may be unknown or imperceptible to base station 520. Such procedures and functionalities may be known and practiced in the art. In certain embodiments, measurements may involve proprietary UE signaling facilitating host computer 510's measurements of throughput, propagation times, latency and the like. The measurements may be implemented in that software 511 and 531 causes messages to be transmitted, in particular empty or 'dummy' messages, using OTT connection 550 while it monitors propagation times, errors etc.

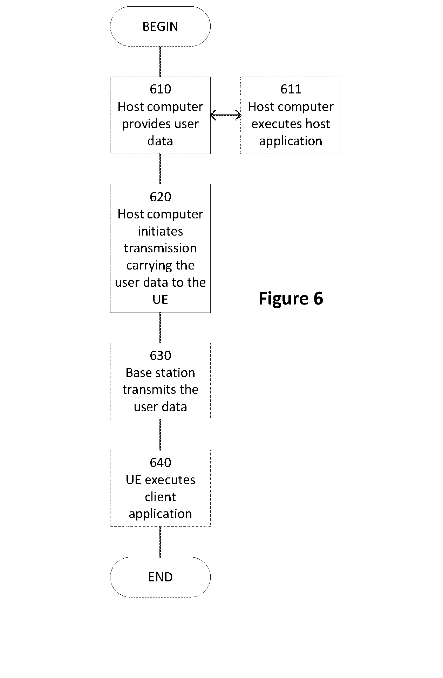

Figure 6 is a flowchart illustrating a method implemented in a communication system, in accordance with one embodiment. The communication system includes a host computer, a base station and a UE which may be those described with reference to Figures 4 and 5. In some embodiments, the UE may be a RedCap UE. In step 610, the host computer provides user data. In substep 611 (which may be optional) of step 610, the host computer provides the user data by executing a host application. In step 620, the host computer initiates a transmission carrying the user data to the UE. In step 630 (which may be optional), the base station transmits to the UE the user data which was carried in the transmission that the host computer initiated, in accordance with the teachings of the embodiments described throughout this disclosure. In step 640 (which may also be optional), the UE executes a client application associated with the host application executed by the host computer.

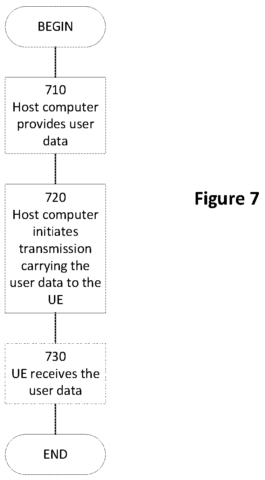

Figure 7 is a flowchart illustrating a method implemented in a communication system, in accordance with one embodiment. The communication system includes a host computer, a base station and a UE which may be those described with reference to Figures 4 and 5. In step 710 of the method, the host computer provides user data. In an optional substep (not shown) the host computer provides the user data by executing a host application. In step 720, the host computer initiates a transmission carrying the user data to the UE. The transmission may pass via the base station, in accordance with the teachings of the embodiments described throughout this disclosure. In step 730 (which may be optional), the UE receives the user data carried in the transmission.

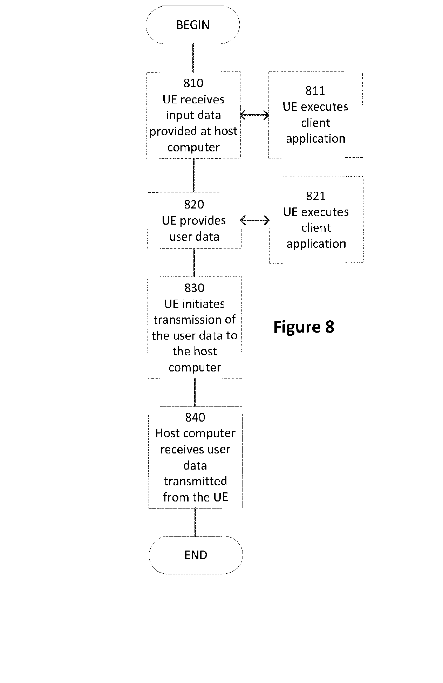

Figure 8 is a flowchart illustrating a method implemented in a communication system, in accordance with one embodiment. The communication system includes a host computer, a base station and a UE which may be those described with reference to Figures 4 and 5. In step 810 (which may be optional), the UE receives input data provided by the host computer. Additionally or alternatively, in step 820, the UE provides user data. In substep 821 (which may be optional) of step 820, the UE provides the user data by executing a client application. In substep 811 (which may be optional) of step 810, the UE executes a client application which provides the user data in reaction to the received input data provided by the host computer. In providing the user data, the executed client application may further consider user input received from the user. Regardless of the specific manner in which the user data was provided, the UE initiates, in substep 830 (which may be optional), transmission of the user data to the host computer. In step 840 of the method, the host computer receives the user data transmitted from the UE, in accordance with the teachings of the embodiments described throughout this disclosure.

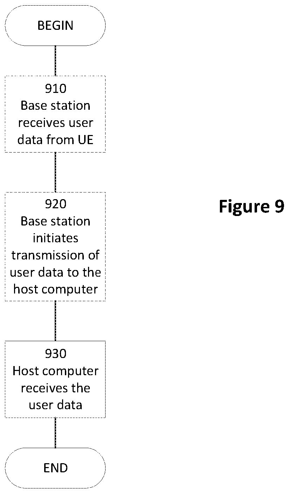

Figure 9 is a flowchart illustrating a method implemented in a communication system, in accordance with one embodiment. The communication system includes a host computer, a base station and a UE which may be those described with reference to Figures 4 and 5. In step 910 (which may be optional), in accordance with the teachings of the embodiments described throughout this disclosure, the base station receives user data from the UE. In step 920 (which may be optional), the base station initiates transmission of the received user data to the host computer. In step 930 (which may be optional), the host computer receives the user data carried in the transmission initiated by the base station.

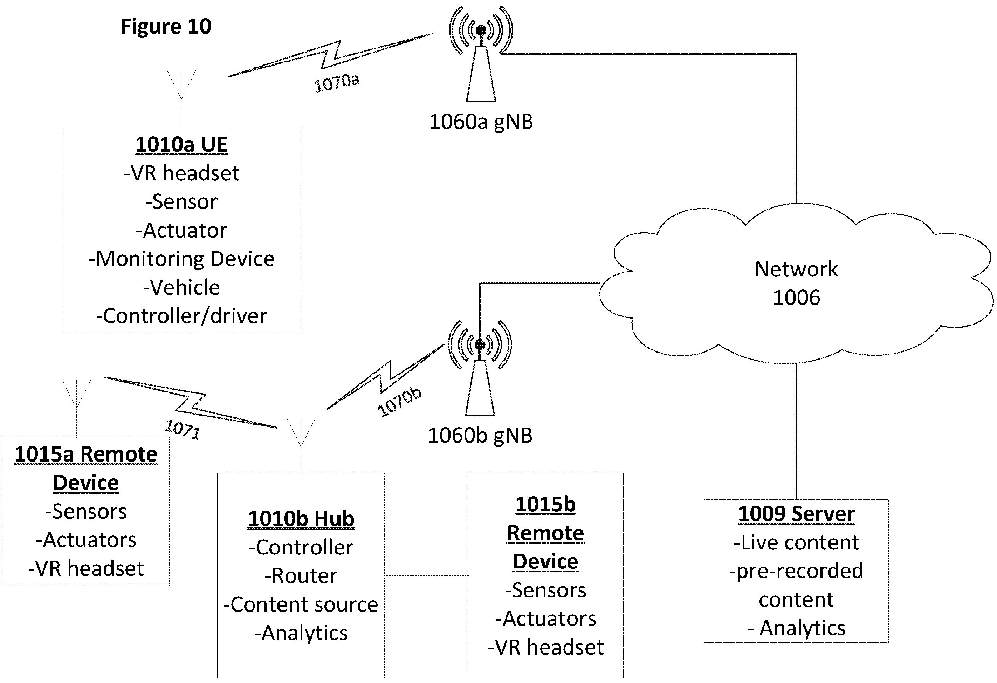

Figure 10 depicts a wireless network comprising different devices connected, either directly or indirectly, to the wireless network through one or more access network nodes, such as gNBs 1060a and 1060b. In particular, the wireless network includes access network nodes such as gNBs 1060a and 1060b, UE 1010a, hub 1010b, remote devices 1015a and 1015b and server 1009. UE 1010a and hub 1010b may be any of a wide variety of devices capable of communicating wirelessly with gNBs 1060's. Although hub 1010b is referred to as a hub, it may also be considered a UE (with hub functionality) because it is able to communicate wirelessly with gNB 1060b using a standard protocol, for example a wireless standard such as one provided by 3GPP. In fact, each of the devices illustrated in Figure 10 represent a wide variety of different devices that can be used in different scenarios as discussed in more detail below. Any of these devices which are able to communicate wirelessly with a gNB, eNB or any other similar 3GPP access node may be considered a wireless device or UE.

Looking now at some of the possibilities, UE 1010a may be any of a variety of different devices that are able to wirelessly communicate with gNB 1060a. Some examples, which are listed in Figure 10, include a virtual reality (VR) headset, a sensor, an actuator, a monitoring device, a vehicle, or a remote controller. These examples are not exhaustive and include therein a wide variety of more specific devices, including a wide range of Internet of Things (IoT) devices. For example, in embodiments where UE 1010a is a VR headset, UE 1010a may be a cell phone that is used with a head mount or it may be a standalone or dedicated VR headset. In some embodiments UE 1010a may be an augmented reality (AR) headset. As an AR or VR headset UE 1010a may be used for entertainment (e.g., gaming, videos, etc.), education/business (e.g., remote conferences, virtual lectures, etc.), medical (e.g., remote diagnostic, patient consultation, etc.), or any other use in which virtual or augmented content may be provided to a remote user. In any of these cases UE 1010a may be receiving content via wireless connection 1070a with gNB 1060a.

As another example, in embodiments where UE 1010a is a sensor or monitoring device, UE 1010a may be a motion, gravitational, moisture, temperature, biometric, speed, door/window open, smoke, fire, volume, flow, or any other type of device that is able to detect or measure one or more conditions. As a sensor UE 1010a may also be able to capture conditions. For example, UE 1010a may capture images if it comprises a camera or sound if it comprises a microphone. Regardless of the type of sensor, UE 1010a may provide an output via wireless connection 1070a to gNB 1060a. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, in embodiments where UE 1010a is an actuator, UE 1010a may be a motor, switch, or any other device that may change states in response to receiving an input via wireless connection 1070a. For example, UE 1000a may be a vibrator that creates vibration to provide a user with haptic feedback. As another example UE 1000a may be a small motor that adjusts the control surfaces of a drone in flight or to a robotic arm performing a medical procedure. As another example, UE 1000a may be a switch that remotely turns on another device, such as a light.

As another example, in embodiments where UE 1010a is a vehicle, UE 1010a may be a drone, car, plane, ship, train, tractor, robot, or any other type of device comprising one or more sensors and/or actuators that may change its locations whether autonomously or at the direction of a user. In such embodiments where UE 1010a is a remotely controlled vehicle, such as a drone, it may receive instructions on movement, actuating, or sensing from a user via wireless connection 1070a and provide location, sensor or video information back to the user via wireless connection 1070a. In such embodiments where UE 1010a is an autonomous vehicle it may receive alerts and other messages from other vehicles and/or infrastructure sensors via wireless connection 1070a as well provide its own telemetry data to others via wireless connection 1070a.

As another example, in embodiments where UE 1010a is a remote control, UE 1010a may be a device dedicated to controlling other devices or a general-purpose computer with a program or application that provides control of other devices. UE 1010a may send commands to a remote device via wireless connection 1070a. UE 1010a may also receive feedback, telemetry, or other information from the remote device via wireless connection 1070a. UE 1010a may present this received information to a user who may then issue commands for the remote device. For example, UE 1010a may receive via wireless connection 1070a a video signal from a remote surgical room and then issue commands via wireless connection 1070a to a remote surgical machine that can execute the commands.

While only a single UE 1010a is illustrated in Figure 10, in practice any number of UEs may be used together with respect to a single use case. For example, a first UE 1010a may be a speed sensor used in a drone which provides the drone's speed information to a second UE 1010a that is a remote control operating the drone. When the user makes changes from the remote control, a third UE 1010a that is an actuator may adjust a throttle on the drone to increase or decrease the speed. Similarly, in the example above, the first (sensor) and third (actuator) UE 1010a's may be a single UE that handles communication for both the speed sensor and the actuators or UE 10 110a may comprise one or more of the above. Similarly, in the example above, a hub, such as hub 1010b, may be used to handle communication between the sensors and actuators and the controller.

Hub 1010b may be any of a variety of different devices that provides wireless access to gNB 1060b for one or more remote devices 1015a. Some examples of different types of hubs are listed in Figure 10 and include a controller, router, content source and analytics. Hub 1010b may include memory to store data (e.g., video, audio, images, buffer, sensor data, file share) that is collected from, or is to be provided to, remote device 1015a. Hub 1010b may include a processor, operating system, and server functionality. Hub 1010b may include components for wireless communication to enable wireless connection 1071 to remote device 1015a and/or components for a fixed connection to remote device 1015b. Hub 1010b may also include routing capabilities, firewall capabilities, a VPN-server or VPN-client. Hub 1010b may also allow for a different communication scheme and/or schedule between hub 1010b and remote devices 1015 and between hub 1010b and network 1006.

As one example, hub 1010b may be a broadband router enabling direct or indirect access to network 1006 for remote device 1015a. In certain embodiments, hub 1010b may facilitate communication between remote devices 1015a and 1015b. This may be done with, or without, the communications passing through network 1006. In some embodiments, hub 1010b may simply forward the data from remote device 1015a or 1015b to network 1006. In some embodiments, hub 1010b may first filter, buffer, store, analyze or collate the data from remote device 1015a or 1015b before sending on the data to network 1006 or another remote device. Similarly, the data from network 1006 may pass directly through hub 1010b or it may first be processed by hub 1010b on the way to remote device 1015a or 1015b.

As another example, hub 1010b may be a controller that sends commands or instructions to one or more actuators in remote device 1015a. The commands or instructions may be received from a second remote device 1015b, from gNB 1060b or by executable code, script or process instructions in hub 1010b.

As another example, hub 1010b may be a collection place for data from one or more remote devices 1015a and/or 1015b. For example, remote devices 1015a and/or 1015b may be a sensor, a camera, measurement equipment, or any other type of device discussed herein that may provide output or receive input. Hub 1010b may act as a temporary storage for data from, for example remote device 1015b and, in some embodiments, may perform analysis, or other processing on the data. Hub 1010b may have a constant/persistent or intermittent connection to gNB 1060b.

As another example, hub 1010b may be a content source. For example, when remote device 1015a is a VR headset, display, loudspeaker or other media delivery device, hub 1010b may retrieve VR assets, video, audio, or other media via gNB 1060b which it then provides to remote device 1015a either directly, after some local processing, and/or after adding additional local content.

Remote device 1015a may be any of a variety of different devices, for example, remote device 1015a may be a device comprising one or more of sensors, actuators, and/or a screen. Remote device 1015a may alternatively be a VR (or AR) headset, a Machine-2-Machine (M2M) device, an IoT device, an internet of Everything (IoE) device, or any other type of device which is capable of accessing a communication network wirelessly via a hub or a device capable of acting as a hub, which in the present context comprise providing network access to a device which is not able to communicate directly with communication network 1006 via gNB 1060a or 1060b. In some scenarios, remote device 1015a may be able to establish a wireless connection with gNB 1060a or 1060b yet nonetheless still connects via hub 10 110b. Remote device 1015b may be similar to remote device 1015a in most respects except that it has a wired connection to hub 1010b rather than a wireless connection, such as wireless connection 1071.

gNBs 1060a and 1060b may provide various wireless devices such as UE 1010a and hub 1010b with wireless access to network 1006. Network 1006 may connect the various devices illustrated in Figure 10 including server 1009 which may host a variety of applications such as live and pre-recorded content, data collection services such as retrieving and compiling data on various ambient conditions detected by a plurality of remote devices 1015a, 1015b or UE 1010a, analytics functionality, social media, functions for controlling or otherwise interacting with remote devices, functions for an alarm and surveillance center, or any other such function done by a server. For example, factory status information may be collected and analyzed by server 1009. As another example, server 1009 may process audio and video data which may have been retrieved from UE 1010a for use in creating maps. As another example, server 1009 may collect and analyze real-time data to assist in controlling vehicle congestion (e.g., controlling traffic lights). As another example, server 1009 may store surveillance video uploaded by remote device 1015b via hub 1010b. As another example, server 1009 may store media content such as video, audio, VR, or AR which it can broadcast, multicast or unicast to remote devices such as UE 1010a or remote device 1015a. As other examples, server 1009 may be used for energy pricing, for remote control of non-time critical electrical load to balance power generation needs, location services, presentation services (such as compiling diagrams etc. from data collected from remote devices), or any other function of collecting, retrieving, storing, analyzing and/or transmitting data.

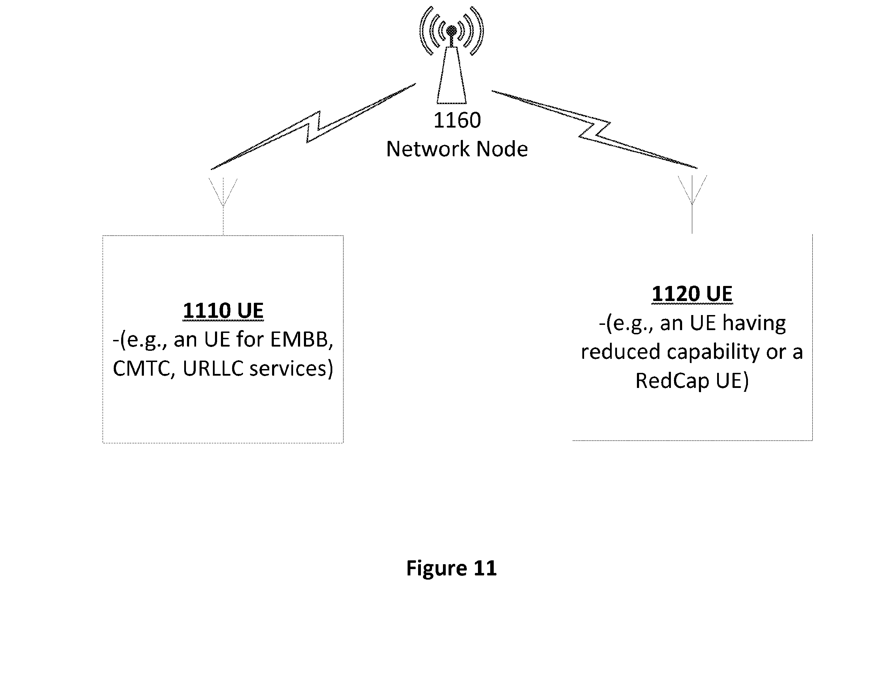

Figure 11 illustrates an exemplary network node 1160 and exemplary UEs 1110 and 1120. Network node 1160 can be any type of node described above (e.g., node 160b, 1060a, 1060b). In one embodiment, UE 1110 is a non-RedCap UE that is configured to provide eMBB, CMTC, and/or URLLC of services; and UE 1120 is a RedCap UE configured to provide MTC, MBB, IoT type of services. In general, UE 1110 may have higher complexity and higher performance requirements than UE 1120. For example, UE 1120 may have a reduced UE bandwidth, a reduced number of transmitter and/or receiver antennas, a half-duplex FDD (Frequency Division Duplexing) mode, relaxed UE processing time, relaxed UE processing capabilities, or the like. Furthermore, UE 1110 may have a higher mobility than UE 1120. For example, UE 1110 can be a smartphone, a sensor mounted in a vehicle, a drone, or the like. UE 1120 can be a surveillance camera, a roadside sensor, a parking structure sensor, or the like.

Existing initial access processes (e.g., the two-step RA process) may be performed for both UE 1110 and UE 1120. However, because UE 1120 is a RedCap UE, it may experience a loss of signal coverage or a poor signal coverage due to, for example, its reduced device bandwidth, reduced number of antennas, or the like. The loss of signal coverage or poor signal coverage may be experienced more often or more easily for a RedCap UE than a non-RedCap UE. For example, a RedCap UE located near a cell edge may experience poor signal coverage and thus require coverage compensation, while a non-RedCap UE similarly located may not. Moreover, UE 1120 may be a RedCap UE that remains in a same physical location for an extended period of time (e.g., hours, days, months). Thus, a RedCap UE may have different needs for initial access than a non-RedCap UE. As such, the existing standard two-step RA process may not work well for RedCap UEs such as UE 1120. Furthermore, a network node (e.g., network node 1160) may need to identify that a UE is a RedCap UE and restrict its access when necessary for various purposes including, e.g., freeing up radio resources for other UEs. After a network node identifies a UE as a RedCap UE (or a non-RedCap UE), the network node can schedule the UE according to its capabilities (e.g., its reduced bandwidth, coverage compensation requirements, or the like) and/or restrict the access of the UE when necessary. Configurations of the two-step RA process may also need to be adjusted if a UE is identified as a RedCap UE. Methods for adjusting the standard two-step RA process are described in more detail in the below embodiments.

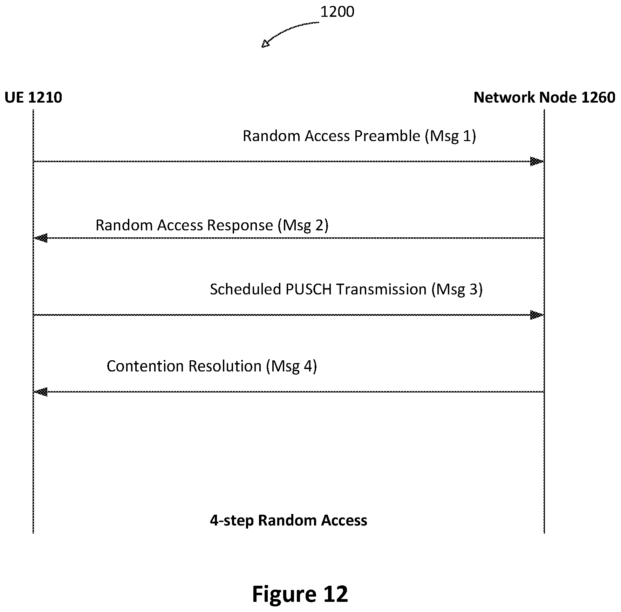

Figure 12 illustrates a typical four-step random access (RA) process 1200. Four-step RA process 1200 is a contention-based process and is sometimes also referred to as a four-step RA procedure. As illustrated in Figure 12, UE 1210 performs four-step RA process 1200 to establish control and data connections with network node 1260. UE 1210 can be a RedCap UE or a non-RedCap UE. In four-step RA process 1200, UE 1210 waits for the first available random access opportunity, announced by network node 1260. UE 1210 randomly selects a random access (RA) preamble from a pool of preambles shared with other UEs located in the same cell. Because the selection is random, there is a potential risk that multiple UEs may select the same preamble and thus may experience conflict or contention. In four-step RA process 1200, this contention may be resolved by network node 1260. UE 1210 transmits the selected RA preamble (denoted as Msg1) to network node 1260 over a physical random access channel (PRACH). UE 1210 then waits for a RA response (also referred to as Msg2) from network node 1260. Upon receiving the RA preamble (Msg1) from UE 1210, network node 1260 applies for a radio network temporary identifier (e.g., TC-RNTI or C-RNTI) and uplink and downlink scheduling resources. Then, network node 1260 transmits a RA response (denoted as Msg2) to UE 1210. The RA response (Msg2) is transmitted through a physical downlink shared channel (PDSCH). The RA response includes, for example, the RA-preamble identifier, timing alignment information, initial uplink grant, and TC-RNTI/C-RNTI.

If UE 1210 receives a RA response (Msg2) that includes an RA-preamble identifier that is the same as the identifier included in the transmitted RA-preamble, UE 1210 transmits scheduled uplink information over the physical uplink shared channel (PUSCH). The scheduled PUSCH transmission is typically denoted as Msg3. The messages and information included in Msg3 may also be referred to as the RA payload, which comprises, for example, an initial RRC connection setup message, an RRC connection reestablishment request message, a RRC handover confirm message, the TC-RNTI/C-RNTI, etc. After UE 1210 transmits Msg3, network node 1260 facilitates UE 1210 to resolve contention using, for example, the C-RNTI on the PDCCH (physical downlink channel that carries downlink control information) or the UE contention resolution identity on the PDSCH. The contention resolution (typically denoted as Msg4) is transmitted from network node 1260 to UE 1210. If the contention resolution is successful, control and data connections are established between UE 1210 and network node 1260. If the contention resolution fails, UE 1210 can repeat the four-step RA process 1200 if the number of RA attempts has not reached an allowable limit (e.g., 10).

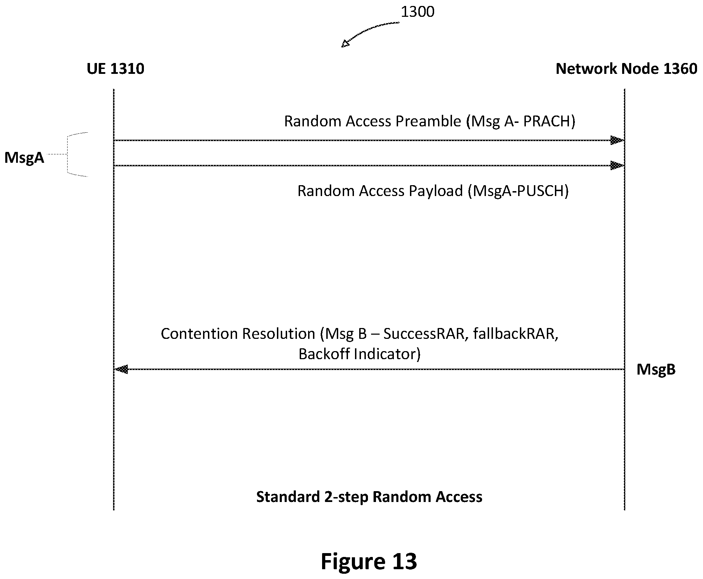

Figure 13 illustrates a standard two-step RA process 1300. Standard two-step RA process 1300 is a contention-based process and is sometimes also referred to as a two-step RA procedure. As described above, typically, the standard two-step RA process is an initial access process for using with a UE having good signal coverage and/or for using with a non-RedCap UE (e.g., a UE capable of providing eMBB and/or CMTC services). The standard two-step RA process is described in 3GPP Release-16 or later (e.g., 3GPP TS 38.213). As shown in Figure 13, in standard two-step RA process 1300, the RA preamble and the RA payload (corresponding to Msg1 and Msg3, respectively, in the four-step RA process 1200) are included in the MsgA and transmitted together from UE 1310 to network node 1360. Thus, in standard two-step RA process 1300, UE 1310 does not need to wait for a RA response (equivalent to Msg2 in the four-step RA process) from network node 1260 before it transmits the RA payload (equivalent to Msg3 in the four-step RA process) to network node 1360. UE 1310 can be a RedCap UE or a non-RedCap UE. In this disclosure, MsgA may be referred to as msgA or message A; and MsgB may be referred to as msgB or message B.

In some embodiments, UE 1310 transmits the RA preamble and the RA payload in two subsequent slots or parts depending on the configuration. The RA preamble part in MsgA is also referred to as the MsgA-PRACH part; and the RA payload part in MsgA is also referred to as the MsgA-PUSCH part. PUSCH is the physical uplink channel that carries the user data or RA payload. The resources allocated for PUSCH are within the bandwidth part (BWP) of the carrier. The RA payload in MsgA may be transmitted using a resource dedicated to the specific RA preamble. Thus, standard two-step RA process 1300 provides a shorter latency than the four-step RA process 1200 described above.

In a standard two-step RA type process, a UE is informed of the potential time-frequency resources where it may transmit the MsgA-PRACH part and the MsgA-PUSCH part via higher layer signaling from the network node. The MsgA-PRACH part is transmitted in periodically recurring RACH occasions (ROs). The MsgA-PUSCH part is transmitted in periodically recurring PUSCH occasions (POs). The PUSCH occasions are described in the MsgA PUSCH configurations provided by the higher layer signaling. Each MsgA PUSCH configuration defines a starting time of the PUSCH occasions, which is measured from the start of a corresponding RACH occasion (RO). Multiple POs may be multiplexed in time and frequency in a MsgA PUSCH configuration, where multiple POs in an OFDM (Orthogonal Frequency Divisional Multiplexing) symbol occupy a predetermined number of PRBs (Physical Resource Blocks) and are adjacent in frequency. Multiple POs may occupy "L" contiguous OFDM symbols, where "L" denotes an allocation length (e.g., 6). Multiple POs multiplexed in time in a MsgA PUSCH configuration may be separated by a configured gap "G" symbols long (e.g., 1). The start of the first occupied OFDM symbol in a PUSCH slot is indicated via a start and length indicator value ("SLIV"). For example, in an SLIV, "S" may equal to 1 and "L" may equal to 6, where "S" denotes the start of a first occupied OFDM symbol and "L" denotes the allocation length. The MsgA PUSCH configuration may comprise multiple contiguous PUSCH slots, each slot including the same number of POs. A UE may be scheduled with PRBs on a per slot basis. For example, one PRB pair may be mapped to two consecutive time slots. One PRB may span 12 subcarriers over 14 OFDM symbols and in total of 168 resource elements. A resource element is a smallest physical channel unit. Moreover, the modulation and coding scheme (MCS) for MsgA PUSCH is also provided by the MsgA PUSCH configuration.

In some embodiments, each PRACH preamble maps to a PUSCH occasion associated with a DMRS (Demodulation Reference Signal) resource. The DMRS is used by a radio receiver to produce channel estimates for demodulation of an associated physical channel. In particular, each PRACH preamble maps to a PUSCH occasion and a DMRS port and/or a DMRS port-scrambling sequence combination. The mapping allows a network node to uniquely determine the location of the associated PUSCH in time and frequency as well as the DMRS port and/or scrambling from the preamble selected by the UE. The PRACH preambles also map to associated SSBs (Synchronization Signal Blocks). An SSB comprises a PSS (Primary Synchronization Signal), an SSS (Secondary Synchronization Signal), and the PBCH (Physical Broadcast Channel). Using the SSB, the UE can decode the PSS and SSS to decode time slot information and physical cell ID. The SSB-to-preamble association combined with the preamble-to-PUSCH association allow a PO to be associated with a RACH preamble. This indirect preamble to PUSCH mapping may be used to allow a network node to use analog beamforming to receive a MsgA-PUSCH part with the same beam that it uses to receive the MsgA-PRACH preamble.

With reference still to Figure 13, after transmitting MsgA, UE 1310 monitors for a response from network node 1360. Network node 1360 performs contention resolution in a similar manner as those described above for the four-step RA process 1200. Network node 1360 then transmits the contention resolution as MsgB to UE 1310. The content of MsgB depends on whether network node 1360 is able to successfully process MsgA-PRACH part and the MsgA-PUSCH part. If the MsgA-PRACH part is detected but the decoding of the MsgA-PUSCH part fails, network node 1360 includes a "fallbackRAR" or "Back off" indication in MsgB and the subsequent UE process can be performed like those described above regarding the four-step RA process. In other words, the UE may fall back to use the four-step RA process. If both the MsgA-PRACH part and the MsgA-PUSCH part are decoded, network node 1360 includes a "successRAR" indication and this completes the contention resolution. In some embodiments, a hybrid automatic repeat request (HARQ) feedback is enabled for the successful reception of the "successRAR" indication. The "successRAR" indication includes, for example, at least the contention resolution ID, the C-RNTI, and the timing advance (TA) command.

While the standard two-step RA process reduces the random access latency, it also may consume more resources because it uses the contention-based data transmission. In the standard two-step RA process, the resources that are configured for data transmission may not be used, resulting in a waste of radio communication resource. Moreover, in the standard two-step RA process, the network node does not provide feedback on how to adjust the uplink synchronization before the data payload is transmitted in the MsgA-PUSCH part. As a result, the timing advance (TA) is effectively zero for a two-step RA process. Timing Advance (TA) is a command transmitted by the network node to UE to adjust its uplink transmission timing. The Timing Advance Command (TAC) informs the UE the amount of time that it needs to advance the uplink transmissions. Therefore, if the TA is effectively zero, performing the two-step RA process may be restricted to a cell having a smaller size, whereas the four-step RA process may be used in cells having any size.

In some embodiments, both the four-step RA process and two-step RA process are configured in a cell on shared PRACH resources and are also configured for the UE. The UE can be a RedCap UE or a non-RedCap UE. The UE can choose its preamble from one specific set if the condition(s) of the four-step RA process is met, or from another set if the condition(s) of the two-step RA process is met. For example, one such condition is the measured RSRP (Reference Signal Received Power). If the UE is located in an area having good signal coverage, the measured RSRP satisfies a threshold. As a result, the UE (either a RedCap UE or a non-RedCap UE) may select the preamble for the two-step RA process (e.g., to achieve shorter latency). Thus, in some embodiments, a preamble partition is performed to distinguish between the four-step RA process and the two-step RA process when shared PRACH resources are used. In other embodiments, the PRACH configurations are different for the two-step and four-step RA processes. For example, the space of preambles is partitioned between the two-step RA process and the four-step RA process. Therefore, based on the preamble used by the UE, it can be determined whether the UE is using the two-step RA process or the four-step RA processes.

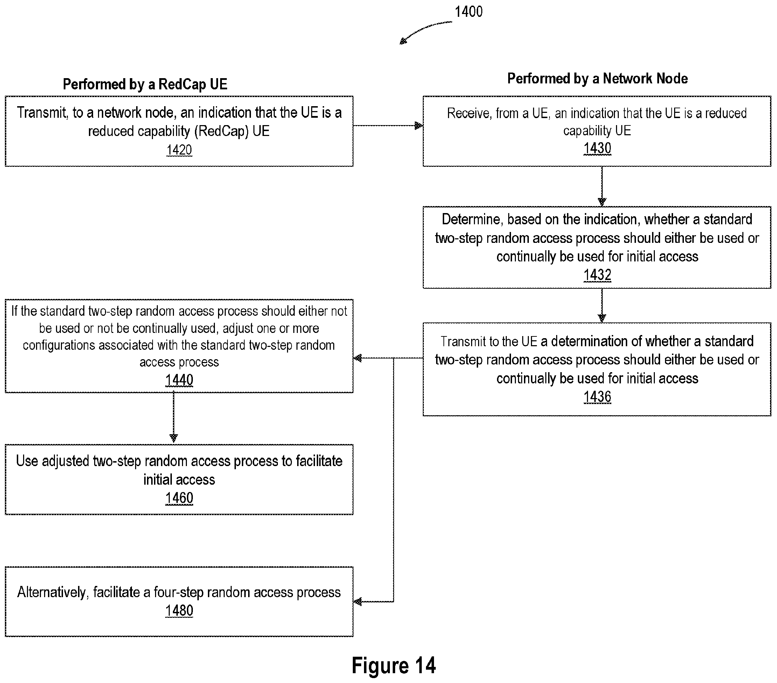

As described above, for a RedCap UE, the standard two-step RA process may need to be adjusted because the RedCap UE has reduced capabilities such as a reduced UE device bandwidth, a reduced number of antennas, or the like. Such reduced capabilities may lead to poor or loss of cellular signal coverage, particular at the cell edge area where the signals are weak. As a result, if the signal coverage for the RedCap UE is poor, the standard two-step RA process may need to be adjusted so that the two-step RA process may still be used with adjusted configuration. A method 1400, as illustrated in Figure 14, can be used for performing initial access based on a two-step RA process with adjusted configurations. Method 1400 can be performed by a network node (e.g., node 1160) and a RedCap UE (e.g., UE 1120). In step 1420, the RedCap UE transmits, to the network node, an indication that the UE is a reduced capability UE. A UE typically has knowledge of its own device capabilities (e.g., the number of antennas, the bandwidth capabilities, configurations indicating whether the UE's processing time and/or processing capabilities are relaxed, and/or its supported duplexing mode). Thus, it can provide such knowledge or a representation thereof to the network node as an indication (sometimes also referred to as an early indication). In the invention, the indication is included in the MsgA transmission to the network node. As described above, in a two-step RA process, the MsgA transmission includes the MsgA-PRACH part and MsgA-PUSCH part (corresponding to Msg1 and Msg3 in a four-step RA process respectively). The indication of the UE's device capabilities or that it is a RedCap UE may be transmitted to the network node in the MsgA-PRACH part or the MsgA-PUSCH part transmissions. Correspondingly, if a four-step RA process is used, the early indication may be transmitted to the network node in the Msg1 or Msg3 transmissions.

In some embodiments, the UE determines which part of MsgA is to be used for transmitting the indication to the network node. This determination can be based on, for example, one or more RACH configurations including periodicity, RACH resources, short or long preambles, or the like. For example, the network node may partition the RACH resources between RedCap UEs and non-RedCap UEs under certain conditions. In a four-step RA process, if the partitioning does not impact the RACH performance, the UE determines that the indication should be included in Msg1. If the partitioning impacts the RACH performance, the UE determines that the indication should be included in Msg3. In other embodiments, whether to include the indication in Msg 1 or Msg 3 is configurable and adaptive. In a two-step RA process, the UE can include the indication in MsgA (e.g., in the control elements (CE) of the medium access control (MAC) layer). The indication of the UE's device capabilities or that it is a RedCap UE can facilitate the network node to treat a RedCap UE differently during a two-step RA process.

In another embodiment, the network node may request the UE to provide the indication of its device capabilities or whether it is a RedCap UE. In another embodiment, the network node may infer the UE's device capabilities or whether it is a RedCap UE. For example, the network node (e.g., a gNB) may infer the UE's device capabilities based on the data of the number of cell or beam reselections in the past, the UE's location data, the UE's model, the UE's registration or subscription information, or the like. The data for such an inference may be provided from a core network node (e.g., subscription information) and/or obtained based on monitoring of the UE data traffic and mobility patterns.

With reference still to Figure 14, in step 1430, the network node (e.g., node 1160) receives the indication of the UE's device capabilities or that the UE is a RedCap UE. Based on the indication, the network node determines whether a standard two-step random access (RA) process should be used for initial access. As described above, the network node can also infer the UE's device capabilities and thus make similar determinations based on the inference that the UE is (or is not) a RedCap UE.

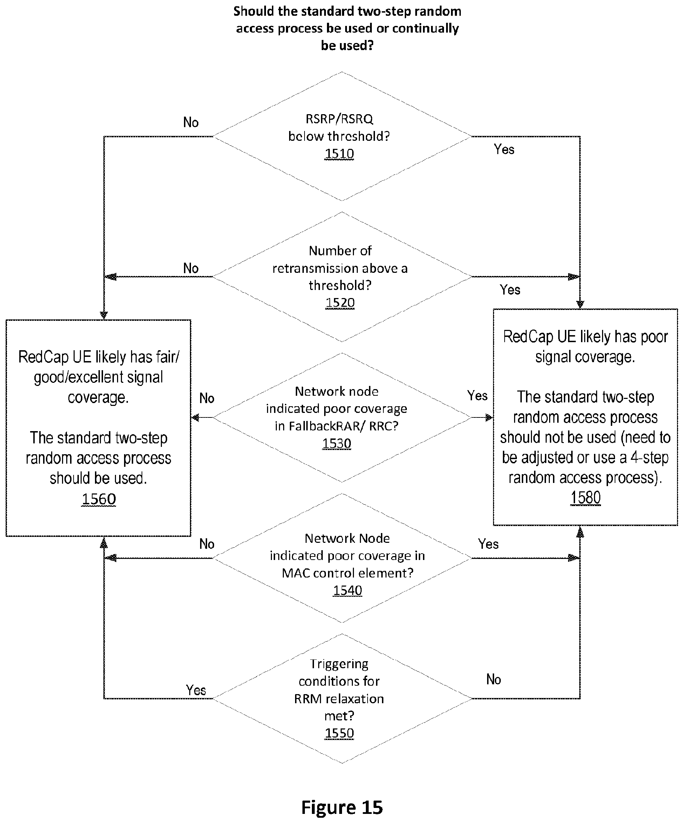

In some embodiments, the network node determines if the standard two-step RA process should be used based on one or more criteria related to signal coverage conditions of the RedCap UE. As described above, if the signal coverage for a RedCap UE is poor, it is likely that the standard two-step RA process should not be used. As described above, the two-step RA process consumes more communication resources (e.g., requires a higher bandwidth/more antennas) than a four-step RA process, making it difficult to be used with a RedCap UE. Figure 15 illustrates several example criteria related to signal coverage conditions, based on which the network node can determine if the standard two-step RA process should be used or continually be used. As shown in Figure 15, first criteria 1510 relate to reference signal received power (RSRP) measurements and/or reference signal received quality (RSRQ) measurements. In particular, RSRP and RSRQ are measures of signal level and quality, respectively, for cells in a cellular network. RSRP and RSRQ are used, for example, when a UE moves from cell to cell and performs cell selection/reselection and handover. RSRP and RSRQ may be measured for a serving cell of the UE or a neighboring cell of the UE. A serving cell of a UE is the cell on which the UE is camped. The serving cell is thus the cell that the UE has chosen after the cell selection or reselection process. A serving cell can have one or more neighboring cells. In some embodiments, each of the serving cell and its neighboring cells corresponds to a respective network node (e.g., NBs, eNBs, gNBs or other types of wireless access points). If a RedCap UE (e.g., RedCap UE 1120) is located close to an edge of a serving cell, it can also perform measurements of RSRP and/or RSRQ of one or more of its neighboring cells.

In some embodiments, the RedCap UE provide the measured RSRP and/or RSRQ values to the network node, which compares the measured RSRP and/or RSRQ values with RSRP and/or RSRQ thresholds, respectively. If the measured RSRP and/or RSRQ values are below respective RSRP and/or RSRQ thresholds (e.g., RSRP threshold about -90dBm and RSRQ threshold about -15dBm), the network nodes determines (step 1580) that the RedCap UE likely has poor signal coverage. As a result, the standard two-step RA process should not be used. If the measured RSRP and/or RSRQ values are equal to or above the respective RSRP and/or RSRQ thresholds, the network node determines (step 1560) that the RedCap UE likely has a fair/good/excellent signal coverage. As a result, the standard two-step RA process should be used.

In some embodiments, the RSRP and/or RSRQ thresholds used for determining if the standard two-step RA process should be used for a RedCap UE are different from (e.g., higher than) those for a non-RedCap UE (e.g., a UE typically used for eMBB and CMTC services). If both the RSRP and/or RSRQ thresholds for RedCap UEs and the RSRP and/or RSRQ thresholds for non-RedCap UEs are used, they effectively divide a cell into three areas. The first area is likely around the center of the cell where the signal coverage is excellent or good. Thus, the measured RSRP and/or RSRQ values for both RedCap UEs and non-RedCap UEs are above their respective thresholds. As a result, the network node determines that both RedCap UEs and non-RedCap UEs in the first area are allowed to use the standard two-step RA process. The second area is likely away from the center of the cell but still around the middle of the cell, where the signal coverage is likely good or fair. Thus, the measured RSRP and/or RSRQ values for non-RedCap UEs are above the threshold for non-RedCap UEs. But the measured RSRP and/or RSRQ values for RedCap UEs may be below the threshold for RedCap UEs. As a result, the network node determines that non-RedCap UEs in the second area are allowed to use the standard two-step RA process, but RedCap UEs in this area are not allowed. This is because the standard two-step RA process will likely not be successfully performed by RedCap UEs in the second area. The third area is likely further away from the cell center and are around the edge of the cell, where the signal coverage is likely poor. Thus, the measured RSRP and/or RSRQ values for non-RedCap UEs and RedCap UEs may be both below their respective thresholds. As a result, the network node determines that neither RedCap UEs nor non-RedCap UEs in the third area are allowed to use the standard two-step RA process. That is, the standard two-step RA process will likely not be successfully performed by either the RedCap UEs or the non-RedCap UEs. It is understood that many scenarios may occur with respect to the signal coverage for RedCap UEs and non-RedCap UEs, and are not limited to the above described ones.

Figure 15 further illustrates second criteria 1520 related to the number of retransmissions of at least a part of MsgA. In a two-step RA process, after the RedCap UE transmits the MsgA, it waits for the MsgB response from the network node. There are three possible scenarios. In the first scenario, the network node does not detect the MsgA-PRACH part. Therefore, no response is transmitted back to the RedCap UE. In this scenario, the RedCap UE may then retransmit the MsgA. The RedCap UE could also fall back to use a four-step RA process starting with a Msg1 transmission. In the second scenario, the network node detects the preamble in the MsgA-PRACH part but fails to successfully decode the MsgA-PUSCH part. In this scenario, the network node transmits back a "fallbackRAR" indication to the RedCap UE with the RAPID (random-access preamble ID) and an uplink grant for the MsgA-PUSCH retransmission. The RedCap UE, upon receiving the "fallbackRAR" indication, retransmits the MsgA-PUSCH part. In some embodiments, this is equivalent to falling back to a four-step RA process and retransmitting Msg3. In the third scenario, the network node detects MsgA and successfully decodes MsgA-PUSCH part. The network node transmits back to the RedCap UE a "successRAR" indication with the contention resolution ID of MsgA. The reception of the "successRAR" by the RedCap UE successfully completes the two-step RA process and no retransmission is needed. In some embodiments, a retransmission threshold can be configured and compared with the number of retransmissions performed by the RedCap UE in the first and second scenarios. For example, if the network node determines that the number of the retransmissions of at least a part of the MsgA is equal to or greater than the retransmission threshold (e.g., 3 times), the network node determines (step 1580) that the RedCap UE likely has poor signal coverage. As a result, the standard two-step RA process should not be used or continually be used. If the number of the retransmissions of at least a part of the MsgA is fewer than the retransmission threshold, the network node determines (step 1560) that the RedCap UE likely has a fair/good/excellent signal coverage. As a result, the standard two-step RA process should be used or continually be used.

Figure 15 further illustrates third criteria 1530 related to a MsgB transmission received by the RedCap UE. In the second scenario described above, in response to the RedCap UE's transmission of the MsgA, the network node may transmit back a "fallbackRAR" indication in MsgB to the RedCap UE. The "fallbackRAR" indication can be used as the criteria to determine if the two-step RA process should be used or continually be used. For example, using the "fallbackRAR" indication, the network node determines (step 1580) that the RedCap UE likely has poor signal coverage. As a result, the two-step RA process should not be used. If there is no "fallbackRAR" indication but instead there is a "successRAR" indication, the network node determines (step 1560) that the RedCap UE likely has a fair/good/excellent signal coverage. As a result, the standard two-step RA process should be used or continually be used.

Third criteria 1530 can also be related to a network node response including radio resource control (RRC) messages and/or information. In 5G, a UE can be in an RRC_IDLE state, an RRC_INACTIVE state, and an RRC_CONNECTED state. In an RRC_IDLE state, the UE is switched on but does not have any established radio resource control (RRC) connection. In an RRC_INACTIVE state, a UE and a network node (e.g., gNB node) save radio and security configurations, which can be used quickly to restore connection between the UE and the network node. The RRC_INACTIVE state is particular useful for machine type communications (MTC) and Internet of Things (IoT) applications, where small amounts of data are communicated. In the RRC_CONNECTED state, radio resources are allocated to the UE and typically active communication (user plane and/or control plane) takes place between the UE and the network node.

A RedCap UE may establish an initial RRC state or may transition from an existing RRC state to another. For doing both, messages and information are included in a transmission (e.g., Msg3 in the four-step RA process or the MsgA in the two-step RA process) from the RedCap UE to the network node. Such messages and information may include, for example, an initial RRC connection setup message, an RRC connection reestablishment request message, and/or a RRC handover confirm message. After receiving such messages and information, the network node responds to the RedCap UE to, for example, facilitate establishing a connection. Transitions between the RRC states may be UE initiated or network node initiated. For example, transition from the RRC_IDLE state to the RRC_CONNECTED state can be performed based on a RRC connection setup procedure, in which the UE initiates an RRC setup request. As another example, transition from the RRC_CONNECTED state to the RRC_IDLE state can be performed using an RRC connection release procedure with a network node initiated RRC release message. During the initial access process, the RedCap UE transmits to the network node an RRC setup request or an RRC connection reestablishment request. A transmission from the network node to the RedCap UE (e.g., MsgB in the two-step RA process) may thus include messages and information responding to, for example, the RRC setup request or the RRC connection reestablishment request. Such messages and information can be used as criteria to determine if the standard two-step RA process should be used or continually be used. For example, if the network node transmits to the RedCap UE messages and information for setting up or transition the RedCap UE to an RRC_IDLE state, the network node determines (step 1580) that the RedCap UE likely has poor signal coverage. As a result, the standard two-step RA process should not be used. If the network node transmits messages and information for setting up or transition the RedCap UE to an RRC_CONNECTED state, the network node determines (step 1560) that the RedCap UE likely has a fair/good/excellent signal coverage. As a result, the standard two-step RA process should be continually be used.

Figure 15 further illustrates fourth criteria 1540 related to using a media access control (MAC) element. The medium access control (MAC) is a sublayer of the data link layer of the open system interconnections (OSI) reference model for data transmission. It is responsible for flow control and multiplexing for transmission medium. It controls the transmission of data packets via remotely-shared channels. In some embodiments, the MAC structure carries special control information. This MAC structure carrying the special control information is called MAC CE (MAC Control Element). In some embodiments, the MAC CE can comprise indications, messages, and information described above with respect to criteria 1510-1530. Thus, the MAC CE can be used by the network node to determine (step 1560 or 1580) if the standard two-step RA process should be used in a similar manner as described above. The MAC CE may also comprise other indications, messages, and information such as C-RNTI, UE contention resolution ID, timing advance command, DRX command, etc.

Figure 15 further illustrates fifth criteria 1550 related to relaxing radio resource management (RRM) measurements. In some embodiments, a RedCap UE may have a different communication pattern than a non-RedCap UE. For example, a RedCap UE may spend a large amount of time (e.g., more than 90%) in an idle or inactive state (e.g., RRC_IDLE or RRC_INACTIVE states). The RedCap UE may also remain in the same physical location for a very long period of time (e.g., a few hours or days) or may not move at all. These types of RedCap UEs may thus be in a stationary-mobility state. For example, a surveillance camera typically remains in a fixed physical location for a very long time after installation. So does a wireless sensor installed in an infrastructures or facilities (e.g., a roadside sensor, a parking lot sensor, a sensor mounted with a traffic light). For these types of RedCap UEs, the RRM measurements may be relaxed. A UE's mobility state is determined based on parameters such as the duration for evaluating allowed amount of cell reselection(s) (denoted by T_{CRmax}), the maximum number of cell reselections to enter High-mobility state (denoted by N_{CR_H}), the maximum number of cell reselections to enter Medium-mobility state (denoted by N_{CR_M}), and the the additional time period before the UE can enter Normal-mobility state (denoted by T_{CRmaxHyst}). These parameters may be provided in the system information for a serving cell of the UE. Depending on one or more of these parameters, a UE may be categorized as in a normal-mobility state, a medium-mobility state, and a high-mobility state. One or more additional parameters, as described in more detail below, may be used to further determine if a RedCap UE is in a stationary-mobility state. A RedCap UE in a stationary-mobility state has a lower mobility than the UE in a low-mobility state.

In some embodiments, relaxing of the RRM measurements may be triggered based on one or more conditions related to determining whether the RedCap UE is in the stationary-mobility state. As one example, the conditions include a cell selection RX level value of a serving cell of the UE, a reference cell selection received signal level value of a serving cell of the RedCap UE, a threshold of variation of the cell selection received signal level value, and a first minimization factor based on a mobility state of the RedCap UE. The difference between the cell selection RX level value of a serving cell of the UE and the reference cell selection received signal level value of a serving cell of the RedCap UE represents a variation of the cell selection RX level value over a preconfigured period of time. The difference or ratio between the threshold of variation of the cell selection received signal level value and the first minimization factor represents the adjusted threshold of variation of the cell selection received signal value. If the variation of the cell selection RX level value is less than the adjusted threshold or its absolute value, the network node may determine that the RedCap UE is at the stationary-mobility state (e.g., not changing its location for an extended period of time such as hours or days). As a result, the RRM measurements should be relaxed. If the network node determines that the RedCap UE is at the stationary-mobility state, it may also determine (step 1560) that the two-step RA process should likely be used, and vice versa (step 1580). This is because if the RedCap UE is in a stationary-mobility state, it is likely that the radio signal conditions are sufficiently statable for a two-step RA process.

In another embodiment, the conditions used to determine if the RedCap UE is in the stationary-mobility state include, for example, a measured received signal level value of a neighbouring cell, a reference signal received power (RSRP) of a neighboring cell, a threshold of variation of the measured received signal level value of a neighboring cell, and a second minimization factor. Similar to the process of determining if the RedCap UE is in the stationary-mobility state using parameters of a serving cell, the determination of whether the RedCap UE is in a stationary-mobility state using the parameters of the neighboring cell can also be performed based on the comparison between the variation of the cell received signal level value of the neighboring cells and a corresponding threshold variation adjusted by the second minimization factor. The comparison can be done in a similar manner as those described above. If the network node determines that the RedCap UE is at the stationary-mobility state, it may determine (step 1560) that the two-step RA process should likely be used, and vice versa (step 1580).

In another embodiment, the above conditions used to determine if the RedCap UE is in the stationary-mobility state further include, for example, a relaxation factor. The relaxation factor is an additional parameter used to further adjust the threshold of variation of the cell selection received signal value of the serving cell and/or the neighboring cell. The relaxation factor is used to account for different types and capabilities of the RedCap UE. For example, a RedCap UE described above may have a reduced number of antennas, non-rotatory antennas, a limited data rate, relaxed latency capabilities, greater battery life limitations due to smaller dimensions, or the like. There are also different types of RedCap UEs such as wearable devices, wireless sensors, IoT devices, video surveillance cameras, or the like. In some embodiments, the measurement accuracy that a UE can obtain is limited by the UE's capabilities and/or types. Different relaxation factors can be used for different types and capabilities of RedCap UEs. For example, if a RedCap UE has a large measurement inaccuracy or variance, a larger value of the relaxation factor can be applied to adjust the threshold to account for such inaccuracy or variance.

In another embodiment, the conditions used to determine if the RedCap UE is in the stationary-mobility state include, for example, beam-level measurements (rather than cell-level measurements described above). A network node may have NR beamforming capabilities. And the RedCap UE may have a rotatory antenna to receive signals from different directions associated with different beams transmitted by the network node. Thus, the measurement of the variation of the received signal level values can be performed for individual beams of a serving cell or a neighboring cell. Such beam-level measurements can be used to determine if the RedCap UE is in the stationary-mobility state. If so, the network node may determine (step 1560) that the two-step RA process should likely be used, and vice versa (step 1580).

In another embodiment, instead of using one reference cell selection received signal level value as described above, a plurality of reference cell selection received signal level values are used. Each of the plurality of reference cell selection received signal level values corresponds to a different direction for receiving signals by a rotatory antenna of the RedCap UE. The different directions may correspond to different beams transmitted by a network node having beamforming capabilities. Thus, multiple beam-level measurements can be performed and compared to the respective reference cell selection received signal level values using a similar manner as described above. Such beam-level measurements can be used to determine if the RedCap UE is at the stationary-mobility state. If so, the network node may determine (step 1560) that the standard two-step RA process should likely be used. Otherwise, the network node may determine (step 1580) that the standard two-step RA process likely should not be used. It is understood that the conditions for determining if the RedCap UE is in the stationary-mobility state are not limited to the above-described examples. Any other desired conditions can also be used. In some embodiments, the RedCap UE transmits to the network node the indication that the RedCap UE is in at a stationary-mobility state.

In some embodiments, relaxing of the RRM measurements may be triggered based on one or more conditions related to determining whether the RedCap UE is located near an edge of a cell. As described above, RSRP and/or RSRQ measurements and different thresholds may be used to divide a cell to three areas having different levels of signal coverage. The second area is far away from the center of the cell but may still be around the middle of the cell. The signal coverage in the second area may be sufficient for a non-RedCap UE but not a RedCap UE. The third area usually is at the edge of the cell and may have poor signal coverage. Thus, in one or both of these two areas, relaxing of the RRM measurements may be triggered. If the network node determines that the RedCap UE is located at the edge of the cell, for example, it may also determine that the standard two-step RA process should not be used.

In some embodiments, the above-described conditions, measurements, criteria, and/or parameters can be transmitted from the RedCap UE to the network node for determining if the standard two-step RA process should be used. For example, based on one or more of these conditions, measurements, criteria, and/or parameters, the network node may determine that the RedCap UE has poor signal coverage and therefore the standard two-step RA process should not be used. In some embodiments, the RedCap UE determines that it is classified as being in a poor signal coverage and transmits a corresponding indication to the network node. Using the indication, the network node may determine that the standard two-step RA should not be used. It is understood that the one or more of the above described above-described conditions, measurements, criteria, and/or parameters can be combined or used in any desired manner to determine if the standard two-step RA process should be used or continually be used.

In some embodiments, a RedCap UE and a non-RedCap UE can be treated differently with respect to the standard two-step RA process. For instance, a RedCap UE may be preconfigured, or may receive from the network node an indication, as to whether the RedCap UE is supported to use the standard two-step RA process. In one embodiment, the network node can transmit an indication (e.g., a system information flag) to the RedCap UE specifying if the configurations of the standard two-step RA process are applicable to a RedCap UE and/or specifying if the RedCap UE is allowed to use resources configured for the standard two-step RA process. In another embodiment, RedCap-specific information elements (IEs) can be used for the adjusting or configuring the transmissions in the two-step RA process. These RedCap-specific information elements are different from IEs used for non-RedCap UEs, which are typically used in the standard two-step RA process. Thus, in some embodiments, for RedCap UEs, different IEs are used to adjust or override the IEs used in the standard two-step RA process. In some embodiments, the RedCap UEs and the non-RedCap UEs may use different sets of preambles. For example, the RedCap UE may receive from the network node an indication as to whether the set of preambles used for the standard two-step RA process is applicable to both the RedCap UE and the non-RedCap UE, or only applicable to non-RedCap UE. If the set of preambles used for the standard two-step RA process is only applicable to the non-RedCap UE, a different or special preamble may be used for the RedCap UE. In some embodiments, the RedCap UE may be preconfigured to use different or special preambles without receiving an indication from the network node.

It is understood that one or more of the steps 1510, 1520, 1530, 1540, and 1550 in Figure 15 can be separately performed, omitted, or combined to adjust configurations of the standard two-step RA process and using the adjusted process to facilitate initial access. Further, Figure 15 does not imply that steps 1510, 1520, 1530, 1540, and 1550 are in any order. They can be performed in any desired order.

With reference back to Figure 14, after determining (step 1432) if the standard two-step RA process should be used, the network node transmits (step 1436) to the UE the determination of whether a standard two-step RA process should be used for initial access. In response to a determination that the standard two-step RA process should not be used for the RedCap UE, the RedCap UE may instead fall back to facilitate (step 1480) a four-step RA process to perform the initial access. For example, upon determining the standard two-step RA process should not be used, the network node may respond to the UE with a "fallbackRAR" indication. The UE may thus fall back to use the four-step RA process. In some embodiment, the four-step RA process may also have adjusted configurations. For example, to compensate for signal coverage loss or poor signal coverage, the RedCap UE may use higher transmit power in the four-step RA process.

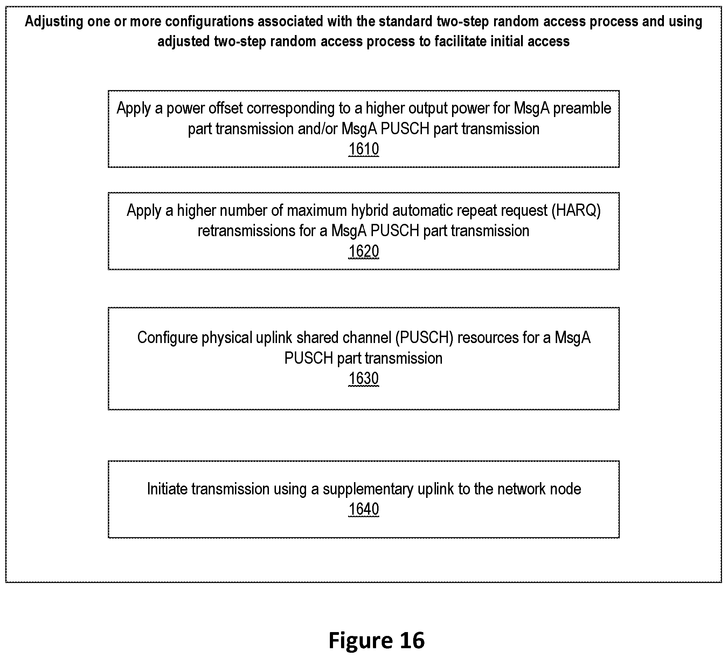

In some embodiments, in order to use, or continue to use, the two-step RA process, the RedCap UE facilitates adjusting (step 1440) of one or more configurations of the standard two-step RA process and facilitate performing (step 1460) the two-step RA process using the adjusted configurations. Figure 16 illustrates several examples of adjusting the configurations and using the adjusted two-step RA process to perform initial access. In Figure 16, any one or more of steps 1610, 1620, 1630, and 1640 can be used to implement step 1440 and/or step 1460 of method 1400 shown in Figure 14. For example, in step 1610, the RedCap UE applies a power offset corresponding to a higher output power for at least one of the MsgA-PRACH part transmission (e.g., the preamble part transmission) or the MsgA-PUSCH part transmission. As one example, the power offset may be configured to be an offset applied to all RedCap UEs or may be configured only for RedCap UEs having poor signal coverage. The power offset may be pre-configured in RedCap UEs or may be provided by the network node after it receives the indication that a particular UE is a RedCap UE.

In some embodiments, the power offset is dynamically or conditionally applied to a RedCap UE. For example, a RedCap UE may have poor signal coverage because its reduced capabilities and/or because it is located at a cell edge. Poor signal coverage is often associated with low radio signal strength and in turn low data transmission bandwidth/speed. For example, if the RedCap UE has only one antenna, the RedCap UE may have a reduced uplink transmission capability because of the limited bandwidth and may also have a reduced downlink transmission capability because of the small antenna number (e.g., 1). Applying power offset can increase the output power of the UE to compensate for the reduction or loss of the signal coverage. In some scenarios, however, if the RedCap UE increases the output power by applying the power offset, it may interfere with another UE located nearby. The nearby UE may be another RedCap UE or a non-RedCap UE. In some embodiments, the network node detects that there is another UE located near the RedCap UE and can provide the RedCap UE with an indication to apply no power offset or a smaller power offset. Thus, the power offset can be selectively applied based on the conditions of the RedCap UE's surround radio environment. The power offset can also be configured dynamically based on the RedCap UE's surrounding radio environment. In some embodiments, the power offset can be preconfigured in the specification for the RedCap UE to apply. In some embodiments, if the communication between the RedCap UE and the network node has been established, a closed-loop power control can be provided, during which the network node transmits messages and/or command to control the power offset applied to the RedCap UE. The power control can be performed in a dynamic and/or closed-loop manner based on measurements of the signal coverage of the RedCap UE and interference levels.

In some embodiments, the value of the power offset applied to the RedCap UE depends on the measured RSRP. As described above, the measured RSRP (Reference Signal Received Power) reflects the level of signal coverage. If the measure RSRP is high (e.g., equal to or above a threshold), it indicates that the RedCap UE has good signal coverage, and vice versa. Therefore, the power offset may be configured as a function of the measured RSRP. For example, if the measured RSRP is below a first threshold, a power offset with a first value may be applied; if the measured RSRP is below a second threshold but equal to or above the first threshold, a power offset with a second value may be applied; and so on. The first value of the power offset is smaller than the second value of the power offset. In general, the lower the measure RSRP, the greater the power offset. It is understood that any function between the measured RSRP (or other similar measured parameters that reflect the signal coverage level) may be configured (e.g., a step function, a linear function, a log function, etc.)

In some embodiments, the value of power offset applied to the RedCap UE depends on measurements for determining if a two-step RA process should be used. As described above, in such a determination, one or more criteria related to signal coverage conditions may be used. These criteria use measurements such as RSRP and/or RSRQ of the serving cell and/or the neighboring cells, the number of retransmissions of at least a part of the MsgA, and/or measurements used to determine if relaxing of RRM measurements should be performed. One or more of these measurements can be used to configure the power offset value in a similar manner as described above with respect to using the RSRP measurements.

With reference still to Figure 16, the standard two-step RA process can also be adjusted by applying (step 1620) a higher number of maximum hybrid automatic repeat request (HARQ) retransmissions of the MsgA-PUSCH part than that of HARQ retransmissions used for the standard two-step RA process. HARQ is a combination of the high-rate forward error correction (FEC) and the automatic repeat request (ARQ) error-control. Using ARQ, redundant bits are added to data to be transmitted using an error-detecting (ED) code such as a cyclic redundancy check (CRC). The receiver of the data detects a corrupted message and requests a new message to be re-transmitted from the transmitter of the data. Using Hybrid ARQ, the original data is encoded with an FEC code, and the parity bits are either immediately transmitted along with the message or only transmitted upon request when a receiver detects an erroneous message. The FEC code is chosen to correct an expected subset of all errors that may occur. As a result, the hybrid ARQ performs better than ordinary ARQ in poor signal coverage conditions. By increasing the upper limit of the allowed number of HARQ retransmissions of the MsgA-PUSCH part (e.g., the RA payload part), the poor signal coverage can be compensated in the adjusted two-step RA process. The maximum number of HARQ retransmission can be preconfigured for the RedCap UE or can be provided by the network node.

In some embodiments, the standard two-step RA process can be adjusted by configuring (step 1630) physical uplink shared channel (PUSCH) resources for a MsgA-PUSCH part transmission to account for the RedCap UE's reduced device capability. The PUSCH resources can be configured to enhance the signal coverage or provide coverage compensation for the RedCap UE. As one example, the PUSCH target data rate can be configured to be lower than a value used in the standard two-step RA process. A lower PUSCH target data rate can reduce the need for bandwidth, thereby reducing the communication resource demand for the two-step RA process. As another example, the modulation coding scheme (MCS) table can be configured to be different from that used for the standard two-step RA process. An MCS table is a lookup table that can be used to find which data rate will be negotiated between a radio signal transmitter and a radio signal receiver if all the connection parameters are known. For each possible combination of modulation, coding rate, number of spatial streams, channel width, and guard interval, there is a unique MCS index, which can be used to look up for the corresponding data rate. In some embodiments, the data rates in the MCS table can be reduced for a RedCap UE than those used for a non-RedCap UE. Lower data rates can reduce the communication resource demand for a two-step RA process.

As another example of configuring the PUSCH resources (step 1630), the number of repetitions for the MsgA-PUSCH part transmission can be configured to account for the reduced capabilities of the RedCap UE. For example, this number of repetitions can be increased to a desired value such that it increases the likelihood that the two-step RA process can be successful for the RedCap UE. As described above, the number of HARQ retransmissions for a MsgA-PUSCH part transmission can also be configured to be a higher number than that of HARQ retransmissions used for the standard two-step RA process. By configuring the number of repetitions for the MsgA-PUSCH transmission and/or the number of HARQ retransmissions, poor signal coverage for a RedCap UE can be compensated. This in turn enhances the likelihood of a successful two-step RA process. In some embodiments, the RedCap UE repeats the MsgA PUSCH part transmission or the HARQ retransmission a desired number of times before receiving a response from the network node. An HARQ retransmission includes repeating of MsgA PUSCH part transmission and/or a MsgA PDSCH transmission.

As another example of configuring the PUSCH resources (step 1630), the frequency hopping settings can be configured to account for the reduced capabilities of the RedCap UE. For example, frequency hopping may be turned on, enabled, or expanded for the RedCap UE to provide more radio frequency diversity, thereby enhancing the likelihood of a successful two-step RA process. As another example, if the network node determines that by enabling frequency hopping, the RedCap UE may cause interference to its nearby UEs, the network node may turn off, disable, or limit the frequency hopping of the RedCap UE. The frequency hopping settings can be preconfigured or dynamically configured by the RedCap UE and/or the network node.

Figure 16 further illustrates a step 1640, in which the RedCap UE initiates transmission using a supplementary uplink to the network node. For random access in a cell configured with a supplementary uplink (SUL), the network node can explicitly signal the RedCap UE which carrier to use (UL or SUL). Otherwise, the RedCap UE selects the SUL carrier if the measured quality of the downlink (DL) is lower than a broadcast threshold. In some embodiments, the RedCap UE performs carrier (UL or SUL) selection before selecting between the two-step RA process or the four-step RA process. As described above, selecting between the two-step RA process or the four-step RA process may use, for example, the RSRP measurements. The RSRP threshold for selecting between the two-step RA process and four-step RA process can be configured separately for UL and SUL. As described above, if the RSRP measurement is less than the RSRP threshold, it indicates that the RedCap UE may have a poor signal coverage. As such, the RedCap UE may select the SUL carrier. A higher RSRP threshold increases the likelihood that the RedCap UE selects the SUL carrier.

It is understood that one or more of the steps 1610, 1620, 1630, and 1640 in Figure 16 can be separately performed, omitted, or combined to adjust configurations of the standard two-step RA process and using the adjusted process to facilitate initial access. Further, Figure 16 does not imply that steps 1610, 1620, 1630, and 1640 are in any order. They can be performed in any desired order. In some embodiments, the RedCap UE facilitates to adjust the configuration and uses the adjusted two-step RA process to facilitate initial access. Using the adjusted two-step RA process increases the likelihood that the initial access will be successful. The RedCap UE can also fall back to a 4-step RA process to increase the likelihood of a successful initial access.

The foregoing specification is to be understood as being in every respect illustrative and exemplary, but not restrictive, and the scope of the invention disclosed herein is not to be determined from the specification, but rather from the claims as interpreted according to the full breadth permitted by the patent laws. It is to be understood that the embodiments shown and described herein are only illustrative of the principles of the present invention and that various modifications may be implemented by those skilled in the art.

### ABBREVATIONS

- 3GPP: 3rd Generation Partnership Project
- 5G: 5th Generation
- CA: Carrier Aggregation
- CC: Carrier Component
- CCCH SDU: Common Control Channel SDU
- CDMA: Code Division Multiplexing Access
- CIR: Channel Impulse Response
- CMTC: Critical Machine Type Communication
- CP: Cyclic Prefix
- DL: Downlink
- DM: Demodulation
- DRX: Discontinuous Reception
- DTX: Discontinuous Transmission
- eMBB: Enhanced Mobile Broadband
- eNB: E-UTRAN NodeB
- E-SMLC: evolved Serving Mobile Location Center
- E-UTRA: Evolved UTRA
- E-UTRAN: Evolved UTRAN
- gNB: Base station in NR
- GSM: Global System for Mobile communication
- HO: Handover
- IoT: Internet of Things
- LOS: Line of Sight
- LPP: LTE Positioning Protocol
- LTE: Long-Term Evolution
- MAC: Medium Access Control
- MBB: Mobile Broadband
- MBMS: Multimedia Broadcast Multicast Services
- MBSFN: Multimedia Broadcast multicast service Single Frequency Network
- MBSFN ABS: MBSFN Almost Blank Subframe
- MDT: Minimization of Drive Tests
- MIB: Master Information Block
- MME: Mobility Management Entity
- MSC: Mobile Switching Center
- MTC: Machine-Type Communication
- NR: New Radio
- NG-RAN: Next Generation Radio Access Network
- OCNG: OFDMA Channel Noise Generator
- OFDM: Orthogonal Frequency Division Multiplexing
- OFDMA: Orthogonal Frequency Division Multiple Access
- OSS: Operations Support System
- OTDOA: Observed Time Difference of Arrival
- O&M: Operation and Maintenance
- P-CCPCH: Primary Common Control Physical Channel
- PCell: Primary Cell
- PCFICH: Physical Control Format Indicator Channel
- PDCP: Packet Data Convergence Protocol
- PDP: Profile Delay Profile
- PDSCH: Physical Downlink Shared Channel
- PGW: Packet Gateway
- PLMN: Public Land Mobile Network
- PMI: Precoder Matrix Indicator
- PRACH: Physical Random Access Channel
- PRS: Positioning Reference Signal
- PSS: Primary Synchronization Signal
- PUCCH: Physical Uplink Control Channel
- PUSCH: Physical Uplink Shared Channel
- RACH: Random Access Channel
- QAM: Quadrature Amplitude Modulation
- RAN: Radio Access Network
- RAT: Radio Access Technology
- RedCap: Reduced Capability
- RLC: Radio Link Control
- RLM: Radio Link Management
- RNC: Radio Network Controller
- RNTI: Radio Network Temporary Identifier
- RRC: Radio Resource Control
- RRM: Radio Resource Management
- RS: Reference Signal
- RSCP: Received Signal Code Power
- RSRP: Reference Symbol Received Power OR Reference Signal Received Power
- RSRQ: Reference Signal Received Quality OR Reference Symbol Received Quality
- RSSI: Received Signal Strength Indicator
- RSTD: Reference Signal Time Difference
- SCH: Synchronization Channel
- SCell: Secondary Cell
- SDAP: Service Data Adaptation Protocol
- SDU: Service Data Unit
- SFN: System Frame Number
- SGW: Serving Gateway
- SI: System Information
- SIB: System Information Block
- SNR: Signal to Noise Ratio
- SON: Self Optimized Network
- SS: Synchronization Signal
- SSS: Secondary Synchronization Signal
- SUL: Supplement UpLink
- TDD: Time Division Duplex
- TDOA: Time Difference of Arrival
- TOA: Time of Arrival
- TS: Technical Specification
- TSS: Tertiary Synchronization Signal
- TTI: Transmission Time Interval
- UE: User Equipment
- UL: Uplink
- UMTS: Universal Mobile Telecommunication System
- URLLC: Ultra-Reliable Low-Latency Communication
- USIM: Universal Subscriber Identity Module
- UTDOA: Uplink Time Difference of Arrival
- UTRA: Universal Terrestrial Radio Access
- UTRAN: Universal Terrestrial Radio Access Network
- WCDMA: Wide CDMA
- WLAN: Wide Local Area Network

## Claims

1. A method performed by a user equipment, UE, having reduced capabilities for performing initial access, the method comprising,
transmitting (1420), to a network node, an indication that the UE is a reduced capability, RedCap, UE;
receiving, from the network node, a determination of whether a standard two-step random access process should either be used or continually be used for initial access;
in response to a determination that the standard two-step random access process should either not be used or not continually be used for the RedCap UE, performing one of:
facilitating (1460) to adjust one or more configurations associated with the standard two-step random access process; and
facilitating (1480) to use a four-step random access process
wherein:
the indication that the UE is a RedCap UE is included in a MsgA transmission to the network node;
and the determination is based on the indication.

2. The method of claim 1, wherein facilitating to adjust the one or more configurations of the standard two-step random access process comprises:
applying a power offset corresponding to a higher output power for at least one of a MsgA preamble part transmission or a MsgA PUSCH part transmission.

3. The method of any of claims 1-2, wherein facilitating to adjust the one or more configurations of the standard two-step random access process comprises:
applying a higher number of maximum hybrid automatic repeat request, HARQ, retransmissions for a MsgA PUSCH part transmission than a number of HARQ retransmissions used for the standard two-step random access process.

4. The method of any of claims 1-3, wherein facilitating to adjust one or more configurations of the standard two-step random access process comprises:
configuring physical uplink shared channel, PUSCH, resources for a MsgA PUSCH part transmission to account for the RedCap UE's reduced device capability.

5. The method of claim 4, further comprising using adjusted two-step random access process to perform the initial access by repeating the MsgA PUSCH part transmission multiple times before receiving a response from the network node.

6. The method of any of claims 1-5, further comprising:
transmitting an indication to the network node that the RedCap UE is in a stationary-mobility state.

7. The method of any of claims 1-6, further comprising at least one of:
receiving, from the network node, an indication of whether configurations of the standard two-step random access process are applicable to the RedCap UE; and
receiving, from the network node, an indication of whether the RedCap UE is allowed to use resources configured for the standard two-step random access process.

8. A method performed by a network node for facilitating initial access of a user equipment, UE, having reduced capabilities, the method comprising:
receiving (1430), from the UE, an indication that the UE is a reduced capability, RedCap, UE;
determining (1432) whether a standard two-step random access process should either be used or continually be used for initial access;
transmitting (1436), to the UE, a determination of whether a standard two-step random access process should either be used or continually be used for initial access;
if the standard two-step random access process should either not be used or not be continually used for the RedCap UE, facilitating one of:
an adjusted two-step random access process having one or more adjusted configurations; and
a four-step random access process;
wherein:
the indication that the UE is a RedCap UE is included in a MsgA transmission received by the network node;
and the determination is based on the indication.

9. The method of claim 8, wherein the determination of whether a standard two-step random access process should either be used or continually be used for initial access is based on one or more criteria related to at least one of:
a reference signal received power, RSRP, measurement;
a reference signal received quality, RSRQ, measurement; and
a number of retransmissions of at least a part of a MsgA.

10. The method of any of claims 8-9, further comprising:
receiving an indication from the RedCap UE that the RedCap UE is in a stationary-mobility state.

11. The method of any of claims 8-10, further comprising at least one of:
transmitting, to the RedCap UE, an indication of whether configurations of the standard two-step random access process are applicable to the RedCap UE; and
transmitting, to the RedCap UE, an indication of whether the RedCap UE is allowed to use resources configured for the standard two-step random access process.

12. A user equipment, UE, for performing an initial access process, comprising:
a transceiver, a processor, and a memory, said memory containing instructions executable by the processor whereby the UE is configured to:
transmit (1420), to a network node, an indication that the UE is a reduced capability, RedCap, UE;
receive, from the network node, a determination of whether a standard two-step random access process should either be used or continually be used for initial access;
in response to a determination that the standard two-step random access process should either not be used or not continually be used for the RedCap UE, perform one of:
facilitating (1460) to adjust one or more configurations associated with the standard two-step random access process; and
facilitating (1480) to use a four-step random access process;
wherein:
the indication that the UE is a RedCap UE is included in a MsgA transmission to the network node;
and the determination is based on the indication.

13. The UE of claim 12, wherein the UE is configured to further perform at least one of:
transmitting an indication to the network node that the RedCap UE is in a stationary-mobility state;
receiving, from the network node, an indication of whether configurations of the standard two-step random access process are applicable to the RedCap UE; and
receiving, from the network node, an indication of whether the RedCap UE is allowed to use resources configured for the standard two-step random access process.

14. A network node for facilitating initial access of a user equipment, UE, having reduced capability, comprising:
a transceiver, a processor and a memory, said memory containing instructions executable by said processor whereby said network node is configured to:
receive (1430), from the UE, an indication that the UE is a reduced capability, RedCap, UE;
determine (1432) whether a standard two-step random access process should either be used or continually be used for initial access;
transmit (1436), to the UE, a determination of whether a standard two-step random access process should either be used or continually be used for initial access;
if the standard two-step random access process should either not be used or not be continually used for the RedCap UE, facilitate one of:
an adjusted two-step random access process having one or more adjusted configurations; and
a four-step random access process;
wherein:
the indication that the network is a RedCap UE is included in a MsgA transmission received by the network node;
and the determination is based on the indication.

15. The network node of claim 14, wherein the network node is further configured to perform at least one of:
receiving an indication from the RedCap UE that the RedCap UE is in a stationary-mobility state;
transmitting, to the RedCap UE, an indication of whether configurations of the standard two-step random access process are applicable to the RedCap UE; and
transmitting, to the RedCap UE, an indication of whether the RedCap UE is allowed to use resources configured for the standard two-step random access process.

## Patentansprüche

1. Verfahren, das von einer Benutzereinrichtung, UE, mit reduzierten Fähigkeiten durchgeführt wird, zur Durchführung von Erstzugriff, wobei das Verfahren Folgendes umfasst:
Senden (1420) einer Angabe an einen Netzwerkknoten, dass die UE eine UE mit reduzierten Fähigkeiten, RedCap, ist;
Empfangen einer Bestimmung dessen von dem Netzwerkknoten, ob für den Erstzugriff ein standardmäßiger Zwei-Schritt-Direktzugriffsprozess entweder verwendet werden sollte oder kontinuierlich verwendet werden sollte;
in Reaktion auf eine Bestimmung, dass der standardmäßige Zwei-Schritt-Direktzugriffsprozess für die RedCap-UE entweder nicht verwendet werden sollte oder nicht kontinuierlich verwendet werden sollte, Durchführen eines von Folgendem:
Ermöglichen (1460) des Anpassens einer oder mehrerer Konfigurationen, die mit dem standardmäßigen Zwei-Schritt-Direktzugriffsprozess assoziiert sind; und
Ermöglichen (1480) des Verwendens eines Vier-Schritt-Direktzugriffsprozesses, wobei:
die Angabe, dass die UE eine RedCap-UE ist, in einer MsgA-Übertragung an den Netzwerkknoten umfasst ist;
und die Bestimmung auf der Angabe basiert.

2. Verfahren nach Anspruch 1, wobei das Ermöglichen des Anpassens der einen oder der mehreren Konfigurationen des standardmäßigen Zwei-Schritt-Direktzugriffsprozesses Folgendes umfasst:
Anwenden eines Leistungsoffsets, der einer höheren Ausgangsleistung entspricht, für mindestens eine von einer MsgA-Präambel-Übertragung oder einer MsgA-PUSCH-Teil-Übertragung.

3. Verfahren nach einem der Ansprüche 1-2, wobei das Ermöglichen des Anpassens der einen oder der mehreren Konfigurationen des standardmäßigen Zwei-Schritt-Direktzugriffsprozesses Folgendes umfasst:
Anwenden einer höheren maximalen Anzahl von Neuübertragungen einer hybriden automatischen Wiederholungsanforderung, HARQ, für eine MsgA-PUSCH-Teil-Übertragung als einer für den standardmäßigen Zwei-Schritt-Direktzugriffsprozess verwendeten Anzahl von HARQ-Neuübertragungen.

4. Verfahren nach einem der Ansprüche 1-3, wobei das Ermöglichen des Anpassens einer oder mehrerer Konfigurationen des standardmäßigen Zwei-Schritt-Direktzugriffsprozesses Folgendes umfasst:
Konfigurieren von Ressourcen eines gemeinsamen physikalischen Uplink-Kanals, PUSCH, für eine MsgA-PUSCH-Teil-Übertragung, um die reduzierte Vorrichtungsfähigkeit der RedCap-UE zu berücksichtigen.

5. Verfahren nach Anspruch 4, ferner umfassend Verwenden des angepassten Zwei-Schritt-Direktzugriffsprozesses zum Durchführen des Erstzugriffs durch mehrmaliges Wiederholen der MsgA-Tei-Übertragung vor dem Empfang einer Antwort von dem Netzwerkknoten.

6. Verfahren nach einem der Ansprüche 1-5, ferner umfassend:
Senden einer Angabe an den Netzwerkknoten, dass die RedCap-UE in einem stationären Mobilitätszustand ist.

7. Verfahren nach einem Ansprüche 1-6, ferner umfassend mindestens eines von Folgendem:
Empfangen einer Angabe dessen von dem Netzwerkknoten, ob Konfigurationen des standardmäßigen Zwei-Schritt-Direktzugriffsprozesses auf die RedCap-UE anwendbar sind; und
Empfangen einer Angabe dessen von dem Netzwerkknoten, ob die RedCap-UE Ressourcen verwenden darf, die für den standardmäßigen Zwei-Schritt-Direktzugriffsprozess konfiguriert sind.

8. Verfahren, das von einem Netzwerkknoten durchgeführt wird, zur Ermöglichung von Erstzugriff einer Benutzereinrichtung, UE, mit reduzierten Fähigkeiten, wobei das Verfahren umfasst:
Empfangen (1430) einer Angabe von der UE, dass die UE eine UE mit reduzierten Fähigkeiten, RedCap, ist;
Bestimmen (1432), ob für den Erstzugriff ein standardmäßiger Zwei-Schritt-Direktzugriffsprozess entweder verwendet werden sollte oder kontinuierlich verwendet werden sollte;
Senden (1436) einer Bestimmung dessen, ob für den Erstzugriff ein standardmäßiger Zwei-Schritt-Direktzugriffsprozess entweder verwendet werden sollte oder kontinuierlich verwendet werden sollte, an die UE;
falls der standardmäßige Zwei-Schritt-Direktzugriffsprozess für die RedCap-UE entweder nicht verwendet werden sollte oder nicht kontinuierlich verwendet werden sollte, Ermöglichen eines von Folgenden:
einen angepassten Zwei-Schritt-Direktzugriffsprozess mit einer oder mehreren angepassten Konfigurationen; und
einen Vier-Schritt-Direktzugriffsprozess; wobei:
die Angabe, dass die UE eine RedCap-UE ist, in einer durch den Netzwerkknoten empfangenen MsgA-Übertragung umfasst ist;
und die Bestimmung auf der Angabe basiert.

9. Verfahren nach Anspruch 8, wobei die Bestimmung dessen, ob für den Erstzugriff ein standardmäßiger Zwei-Schritt-Direktzugriffsprozess entweder verwendet werden sollte oder kontinuierlich verwendet werden sollte, auf einem oder mehreren Kriterien basiert, die sich auf mindestens eines von Folgenden beziehen:
eine Messung einer Referenzsignalempfangsleistung, RSRP;
eine Messung einer Referenzsignalempfangsqualität, RSRQ; und
eine Anzahl von Neuübertragungen mindestens eines Teils einer MsgA.

10. Verfahren nach einem der Ansprüche 8-9, ferner umfassend:
Empfangen einer Angabe von der RedCap-UE, dass die RedCap-UE in einem stationären Mobilitätszustand ist.

11. Verfahren nach einem Ansprüche 8-10, ferner umfassend mindestens eines von Folgendem:
Senden einer Angabe dessen an die RedCap-UE, ob Konfigurationen des standardmäßigen Zwei-Schritt-Direktzugriffsprozesses auf die RedCap-UE anwendbar sind; und
Senden einer Angabe dessen an die RedCap-UE, ob die RedCap-UE Ressourcen verwenden darf, die für den standardmäßigen Zwei-Schritt-Direktzugriffsprozess konfiguriert sind.

12. Benutzereinrichtung, UE, zum Durchführen eines Erstzugriffsprozesses, umfassend:
einen Sendeempfänger, einen Prozessor und einen Speicher, wobei der Speicher Anweisungen enthält, die vom Prozessor ausgeführt werden können, wodurch die UE zu Folgendem konfiguriert ist:
Senden (1420) einer Angabe an einen Netzwerkknoten, dass die UE eine UE mit reduzierten Fähigkeiten, RedCap, ist;
Empfangen von dem Netzwerkknoten einer Bestimmung dessen, ob für den Erstzugriff ein standardmäßiger Zwei-Schritt-Direktzugriffsprozess entweder verwendet werden sollte oder kontinuierlich verwendet werden sollte;
in Reaktion auf eine Bestimmung, dass der standardmäßige Zwei-Schritt-Direktzugriffsprozess für die RedCap-UE entweder nicht verwendet werden sollte oder nicht kontinuierlich verwendet werden sollte, Durchführen eines von Folgendem:
Ermöglichen (1460) des Anpassens einer oder mehrerer Konfigurationen, die mit dem standardmäßigen Zwei-Schritt-Direktzugriffsprozess assoziiert sind; und
Ermöglichen (1480) des Verwendens eines Vier-Schritt-Direktzugriffsprozesses; wobei:
die Angabe, dass die UE eine RedCap-UE ist, in einer MsgA-Übertragung an den Netzwerkknoten umfasst ist;
und die Bestimmung auf der Angabe basiert.

13. UE nach Anspruch 12, wobei die UE dazu konfiguriert ist, ferner mindestens eines von Folgendem durchzuführen:
Senden einer Angabe an den Netzwerkknoten, dass die RedCap-UE in einem stationären Mobilitätszustand ist.
Empfangen einer Angabe dessen von dem Netzwerkknoten, ob Konfigurationen des standardmäßigen Zwei-Schritt-Direktzugriffsprozesses auf die RedCap-UE anwendbar sind; und
Empfangen einer Angabe dessen von dem Netzwerkknoten, ob die RedCap-UE Ressourcen verwenden darf, die für den standardmäßigen Zwei-Schritt-Direktzugriffsprozess konfiguriert sind.

14. Netzwerkknoten zum Ermöglichen von Erstzugriff einer Benutzereinrichtung, UE, mit reduzierten Fähigkeiten, umfassend:
einen Sendeempfänger, einen Prozessor und einen Speicher, wobei der Speicher Anweisungen enthält, die vom Prozessor ausgeführt werden können, wodurch der Netzwerkknoten zu Folgendem konfiguriert ist:
Empfangen (1430) einer Angabe von der UE, dass die UE eine UE mit reduzierten Fähigkeiten, RedCap, ist;
Bestimmen (1432), ob für den Erstzugriff ein standardmäßiger Zwei-Schritt-Direktzugriffsprozess entweder verwendet werden sollte oder kontinuierlich verwendet werden sollte;
Senden (1436) einer Bestimmung dessen, ob für den Erstzugriff ein standardmäßiger Zwei-Schritt-Direktzugriffsprozess entweder verwendet werden sollte oder kontinuierlich verwendet werden sollte, an die UE;
falls der standardmäßige Zwei-Schritt-Direktzugriffsprozess für die RedCap-UE entweder nicht verwendet werden sollte oder nicht kontinuierlich verwendet werden sollte, Ermöglichen eines von Folgenden:
einen angepassten Zwei-Schritt-Direktzugriffsprozess mit einer oder mehreren angepassten Konfigurationen; und
einen Vier-Schritt-Direktzugriffsprozess; wobei:
die Angabe, dass die UE eine RedCap-UE ist, in einer durch den Netzwerkknoten empfangenen MsgA-Übertragung umfasst ist;
und die Bestimmung auf der Angabe basiert.

15. Netzwerkknoten nach Anspruch 14, wobei der Netzwerkknoten ferner dazu konfiguriert ist, mindestens eines von Folgendem durchzuführen:
Empfangen einer Angabe von der RedCap-UE, dass die RedCap-UE in einem stationären Mobilitätszustand ist.
Senden einer Angabe dessen an die RedCap-UE, ob Konfigurationen des standardmäßigen Zwei-Schritt-Direktzugriffsprozesses auf die RedCap-UE anwendbar sind; und
Senden einer Angabe dessen an die RedCap-UE, ob die RedCap-UE Ressourcen verwenden darf, die für den standardmäßigen Zwei-Schritt-Direktzugriffsprozess konfiguriert sind.

## Revendications

1. Procédé réalisé par un équipement utilisateur, UE, présentant des capacités réduites pour réaliser un accès initial, le procédé comprenant :
la transmission (1420), à un nœud de réseau, d'une indication que l'UE est un UE à capacité réduite, RedCap ;
la réception, depuis le nœud de réseau, d'une détermination si un processus d'accès aléatoire à deux étapes standard doit ou non être utilisé ou continuellement utilisé pour un accès initial ;
en réponse à une détermination que le processus d'accès aléatoire à deux étapes standard ne doit pas être utilisé ou continuellement utilisé pour l'UE RedCap, la réalisation de l'une parmi :
la facilitation (1460) de l'ajustement d'une ou plusieurs configurations associées au processus d'accès aléatoire à deux étapes standard ; et
la facilitation (1480) de l'utilisation d'un processus d'accès aléatoire à quatre étapes, dans lequel :
l'indication que l'UE est un UE RedCap est incluse dans une transmission MsgA au nœud de réseau ;
et la détermination est basée sur l'indication.

2. Procédé selon la revendication 1, dans lequel la facilitation de l'ajustement des une ou plusieurs configurations du processus d'accès aléatoire à deux étapes standard comprend :
l'application d'un décalage de puissance correspondant à une puissance de sortie supérieure pour au moins l'une parmi une transmission de partie de préambule MsgA et une transmission de partie PUSCH MsgA.

3. Procédé selon l'une quelconque des revendications 1 et 2, dans lequel la facilitation de l'ajustement des une ou plusieurs configurations du processus d'accès aléatoire à deux étapes standard comprend :
l'application d'un nombre de retransmissions de demande de répétition automatique hybride, HARQ, maximales pour une transmission de partie PUSCH MsgA plus grand qu'un nombre de retransmissions HARQ utilisées pour le processus d'accès aléatoire à deux étapes standard.

4. Procédé selon l'une quelconque des revendications 1 à 3, dans lequel la facilitation de l'ajustement d'une ou plusieurs configurations du processus d'accès aléatoire à deux étapes standard comprend :
la configuration de ressources de canal partagé de liaison montante physique, PUSCH, pour une transmission de partie PUSCH MsgA afin de tenir compte de la capacité de dispositif réduite de l'UE RedCap.

5. Procédé selon la revendication 4, comprenant en outre l'utilisation du processus d'accès aléatoire à deux étapes ajusté pour réaliser l'accès initial par la répétition de la transmission de partie PUSCH MsgA plusieurs fois avant la réception d'une réponse depuis le nœud de réseau.

6. Procédé selon l'une quelconque des revendications 1 à 5, comprenant en outre :
la transmission d'une indication au nœud de réseau que l'UE RedCap se trouve dans un état de mobilité stationnaire.

7. Procédé selon l'une quelconque des revendications 1 à 6, comprenant en outre au moins l'une parmi :
la réception, depuis le nœud de réseau, d'une indication indiquant si des configurations du processus d'accès aléatoire à deux étapes standard sont ou non applicables à l'UE RedCap ; et
la réception, depuis le nœud de réseau, d'une indication indiquant si l'UE RedCap est ou non autorisé à utiliser des ressources configurées pour le processus d'accès aléatoire à deux étapes standard.

8. Procédé réalisé par un nœud de réseau pour faciliter un accès initial d'un équipement utilisateur, UE, présentant des capacités réduites, le procédé comprenant :
la réception (1430), depuis l'UE, d'une indication que l'UE est un UE à capacité réduite, RedCap ;
la détermination (1432) si un processus d'accès aléatoire à deux étapes standard doit ou non être utilisé ou continuellement utilisé pour un accès initial ;
la transmission (1436), à l'UE, d'une détermination si un processus d'accès aléatoire à deux étapes standard doit ou non être utilisé ou continuellement utilisé pour un accès initial ;
si le processus d'accès aléatoire à deux étapes standard ne doit pas être utilisé ou continuellement utilisé pour l'UE RedCap, la facilitation de l'un parmi :
un processus d'accès aléatoire à deux étapes ajusté présentant une ou plusieurs configurations ajustées ; et
un processus d'accès aléatoire à quatre étapes ; dans lequel :
l'indication que l'UE est un UE RedCap est incluse dans une transmission MsgA reçue par le nœud de réseau ;
et la détermination est basée sur l'indication.

9. Procédé selon la revendication 8, dans lequel la détermination si un processus d'accès aléatoire à deux étapes standard doit ou non être utilisé ou continuellement utilisé pour un accès initial est basée sur un ou plusieurs critères liés à au moins l'un parmi :
une mesure de puissance reçue de signal de référence, RSRP ;
une mesure de qualité reçue de signal de référence, RSRQ ; et
un nombre de retransmissions d'au moins une partie d'un MsgA.

10. Procédé selon l'une quelconque des revendications 8 et 9, comprenant en outre :
la réception, depuis l'UE RedCap, d'une indication que l'UE RedCap se trouve dans un état de mobilité stationnaire.

11. Procédé selon l'une quelconque des revendications 8 à 10, comprenant en outre au moins l'une parmi :
la transmission, à l'UE RedCap, d'une indication indiquant si des configurations du processus d'accès aléatoire à deux étapes standard sont ou non applicables à l'UE RedCap ; et
la transmission, à l'UE RedCap, d'une indication indiquant si l'UE RedCap est ou non autorisé à utiliser des ressources configurées pour le processus d'accès aléatoire à deux étapes standard.

12. Equipement utilisateur, UE, pour réaliser un processus d'accès initial, comprenant :
un émetteur-récepteur, un processeur et une mémoire, ladite mémoire contenant des instructions exécutables par le processeur selon lesquelles l'UE est configuré pour :
transmettre (1420), à un nœud de réseau, une indication que l'UE est un UE à capacité réduite, RedCap ;
recevoir, depuis le nœud de réseau, une détermination si un processus d'accès aléatoire à deux étapes standard doit ou non être utilisé ou continuellement utilisé pour un accès initial ;
en réponse à une détermination que le processus d'accès aléatoire à deux étapes standard ne doit pas être utilisé ou continuellement utilisé pour l'UE RedCap, réaliser l'une parmi :
la facilitation (1460) de l'ajustement d'une ou plusieurs configurations associées au processus d'accès aléatoire à deux étapes standard ; et
la facilitation (1480) de l'utilisation d'un processus d'accès aléatoire à quatre étapes, dans lequel :
l'indication que l'UE est un UE RedCap est incluse dans une transmission MsgA au nœud de réseau ;
et la détermination est basée sur l'indication.

13. UE selon la revendication 12, dans lequel l'UE est configuré pour réaliser en outre au moins l'une parmi :
la transmission d'une indication au nœud de réseau que l'UE RedCap se trouve dans un état de mobilité stationnaire ;
la réception, depuis le nœud de réseau, d'une indication indiquant si des configurations du processus d'accès aléatoire à deux étapes standard sont ou non applicables à l'UE RedCap ; et
la réception, depuis le nœud de réseau, d'une indication indiquant si l'UE RedCap est ou non autorisé à utiliser des ressources configurées pour le processus d'accès aléatoire à deux étapes standard.

14. Nœud de réseau pour faciliter un accès initial d'un équipement utilisateur, UE, présentant des capacités réduites, comprenant :
un émetteur-récepteur, un processeur et une mémoire, ladite mémoire contenant des instructions exécutables par ledit processeur selon lesquelles ledit nœud de réseau est configuré pour :
recevoir (1430), depuis l'UE, une indication que l'UE est un UE à capacité réduite, RedCap ;
déterminer (1432) si un processus d'accès aléatoire à deux étapes standard doit ou non être utilisé ou continuellement utilisé pour un accès initial ;
transmettre (1436), à l'UE, une détermination si un processus d'accès aléatoire à deux étapes standard doit ou non être utilisé ou continuellement utilisé pour un accès initial ;
si le processus d'accès aléatoire à deux étapes standard ne doit pas être utilisé ou continuellement utilisé pour l'UE RedCap, faciliter l'un parmi :
un processus d'accès aléatoire à deux étapes ajusté présentant une ou plusieurs configurations ajustées ; et
un processus d'accès aléatoire à quatre étapes ; dans lequel :
l'indication que l'UE est un UE RedCap est incluse dans une transmission MsgA reçue par le nœud de réseau ;
et la détermination est basée sur l'indication.

15. Nœud de réseau selon la revendication 14, dans lequel le nœud de réseau est en outre configuré pour réaliser au moins l'une parmi :
la réception d'une indication, depuis l'UE RedCap, que l'UE RedCap se trouve dans un état de mobilité stationnaire ;
la transmission, à l'UE RedCap, d'une indication indiquant si des configurations du processus d'accès aléatoire à deux étapes standard sont ou non applicables à l'UE RedCap ; et
la transmission, à l'UE RedCap, d'une indication indiquant si l'UE RedCap est ou non autorisé à utiliser des ressources configurées pour le processus d'accès aléatoire à deux étapes standard.
